(19) Europäisches Patentamt
European Patent Office
Office européen des brevets

(11) **EP 2 930 348 A1**

(12) **EUROPEAN PATENT APPLICATION**
published in accordance with Art. 153(4) EPC

(43) Date of publication:
**14.10.2015 Bulletin 2015/42**

(51) Int Cl.:
*F02P 9/00* (2006.01)    *F02P 15/00* (2006.01)

(21) Application number: **12889482.1**

(86) International application number:
**PCT/JP2012/081551**

(22) Date of filing: **05.12.2012**

(87) International publication number:
**WO 2014/087504 (12.06.2014 Gazette 2014/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **TOYOTA JIDOSHA KABUSHIKI KAISHA**
**Toyota-shi, Aichi-ken, 471-8571 (JP)**

(72) Inventor: **KIMURA, Koshiro**
**Toyota-shi**
**Aichi 471-8571 (JP)**

(74) Representative: **Kuhnen & Wacker**
**Patent- und Rechtsanwaltsbüro**
**Prinz-Ludwig-Straße 40A**
**85354 Freising (DE)**

(54) **CONTROL DEVICE OF INTERNAL COMBUSTION ENGINE**

(57)    A control apparatus for an internal combustion engine according to the present invention includes a spark plug (30) for igniting an air-fuel mixture in a cylinder, and is configured to be capable of measuring a discharge voltage of the spark plug (30). The control apparatus calculates a turbulence intensity index value that indicates the turbulence intensity of in-cylinder gas based on a predetermined frequency component extracted from a discharge voltage during at least a part of a discharge duration leading up to ignition and, in accordance with the turbulence intensity index value, adjusts the ignition energy that is supplied to the spark plug (30) during a combustion duration in a cycle in which the turbulence intensity index value is calculated.

[Fig. 7]

**Description**

Technical Field

The present invention relates to a control apparatus for an internal combustion engine, and more particularly to a control apparatus for a spark ignition-type internal combustion engine.

Background Art

A spark ignition-type internal combustion engine has already been disclosed, as described in Patent Literature 1 for example. Patent Literature 1 focuses on a fact that a discharge voltage (secondary voltage) of a spark plug varies in accordance with the strength of a swirl flow (that is, increases and decreases in the flow velocity of a swirl). According to the internal combustion engine described in Patent Literature 1, correction of the ignition timing is performed in accordance with the strength of a swirl flow that is estimated based on a discharge voltage.

Combustion inside a cylinder of an internal combustion engine occurs in three steps, namely, "ignition", "growth of the flame kernel", and "flame propagation". The strength of the aforementioned swirl flow (that is, increases and decreases in the flow velocity of a swirl in the vicinity of a spark plug) is one of the principal factors that determines the rapidity of "ignition" in each cycle, and is not a principal factor that determines "flame propagation". The parameters that are principal factors that determine whether "flame propagation" is favorable or poor are the turbulence intensity of in-cylinder gas, and also the turbulent burning velocity, for which the turbulence intensity is a principal factor. Accordingly, in order to suppress combustion variations in a manner that takes into account the state of flame propagation, it can be said that it is desirable to adopt a configuration such that the turbulence intensity of in-cylinder gas or the turbulent burning velocity can be rapidly estimated in individual cycles. In addition, it can be said that it is desirable to adopt a configuration in which such kind of estimation can be performed at a timing before combustion begins to actually proceed, and engine control as a countermeasure that is in accordance with the estimation result is performed during the same cycle.

The applicants are aware of the following literature, which includes the above described literature, as literature related to the present invention.

Citation List

Patent Literature

Patent Literature 1: Japanese Laid-open Utility Model Application Publication No. 63-168282
Patent Literature 2: Japanese Laid-open Patent Application Publication No. 7-238858
Patent Literature 3: Japanese Laid-open Patent Application Publication No. 2009-13850

**Summary of Invention**

The present invention has been made to solve the above described problems, and an object of the present invention is to provide a control apparatus for an internal combustion engine that is configured so that, utilizing the existing configuration of the internal combustion engine, a turbulence intensity of in-cylinder gas and a turbulent burning velocity are rapidly estimated in individual cycles and combustion variations are suppressed utilizing the estimation results.

One aspect of the present invention is a control apparatus for an internal combustion engine that includes a spark plug, discharge voltage measurement means, and ignition energy adjustment means.

The spark plug is a member for igniting an air-fuel mixture in a cylinder. The discharge voltage measurement means measures a discharge voltage of the spark plug. The ignition energy adjustment means calculates a turbulence intensity index value that indicates a turbulence intensity of in-cylinder gas based on a predetermined frequency component that is extracted from a discharge voltage during at least a part of a discharge duration leading up to ignition, and adjusts, in accordance with the turbulence intensity index value, an ignition energy that is supplied to the spark plug during a combustion duration in a cycle in which the turbulence intensity index value is calculated.

It was found that, due to the influence of the turbulence of in-cylinder gas, a predetermined frequency component is superimposed on a discharge voltage during a discharge duration leading up to ignition. Therefore, according to the above described one aspect of the present invention, by measuring the discharge voltage during at least a part of the relevant discharge duration and acquiring a predetermined frequency component that is extracted from the measured discharge voltage, a turbulence intensity index value that indicates the turbulence intensity of in-cylinder gas can be calculated rapidly (more specifically, at a timing before combustion begins to actually proceed). The turbulence intensity of in-cylinder gas is a dominant factor with respect to the "flame propagation" step during combustion in a cylinder. According to the present invention, the ignition energy that is supplied to a spark plug is adjusted during a combustion duration in the cycle in which the turbulence intensity index value is calculated, in accordance with the turbulence intensity index value that is the aforementioned factor. By performing this control in each cycle, the growth of the flame kernel in each cycle can be controlled in accordance with the level of the turbulence intensity in each cycle, and thus combustion variations among cycles can be effectively suppressed.

The predetermined frequency component in the above described one aspect of the present invention may be a frequency component of a high frequency band that is equal to or greater than a predetermined frequency.

It is thereby possible to utilize the discharge voltage of a spark plug to suitably calculate a turbulence intensity index value that shows the turbulence intensity of in-cylinder gas.

The ignition energy adjustment means in the above described one aspect of the present invention may stop a discharge by the spark plug in a case where the turbulence intensity index value is equal to or greater than a first predetermined value.

Therefore, with respect to a cycle in which it is predicted that combustion will proceed too rapidly because the turbulence intensity index value is too large, it is possible to suppress growth of the flame kernel by decreasing the ignition energy supplied to the spark plug, and thereby suppress the subsequent burning velocity. Thus, combustion variations can be suppressed.

Further, the ignition energy adjustment means in the above described one aspect of the present invention may execute a re-discharge by the spark plug in a case where the turbulence intensity index value is equal to or less than a second predetermined value.

Therefore, with respect to a cycle in which it is predicted that combustion will proceed too slowly because the turbulence intensity index value is too small, it is possible to promote growth of the flame kernel by increasing the ignition energy supplied to the spark plug by re-discharging, and thereby increase the subsequent burning velocity. Thus, combustion variations can be suppressed.

The above described one aspect of the present invention may further include a second spark plug for igniting an air-fuel mixture in the cylinder, and the ignition energy adjustment means may execute a discharge by the second spark plug in a case where the turbulence intensity index value is equal to or less than a second predetermined value.

Therefore, with respect to a cycle in which it is predicted that combustion will proceed too slowly because the turbulence intensity index value is too small, it is possible to promote growth of the flame kernel by increasing the ignition energy by multi-point ignition, and thereby increase the subsequent burning velocity. Thus, combustion variations can be suppressed.

The above described one aspect of the present invention may also include ignition timing detection means for detecting an ignition timing of an air-fuel mixture, and the ignition energy adjustment means may stop a discharge by the spark plug in a case where the turbulence intensity index value is equal to or greater than a first predetermined value and the ignition timing is earlier than a third predetermined value.

Therefore, with respect to a cycle in which it is predicted that both starting and progression of combustion will be occur too rapidly because the turbulence intensity index value is too large and the ignition timing is too early, growth of the flame kernel can be suppressed by decreasing the ignition energy supplied to the spark plug, and as a result the subsequent burning velocity can be suppressed. Thus, combustion variations can be suppressed.

The above described one aspect of the present invention may further include ignition timing detection means for detecting an ignition timing of an air-fuel mixture, and the ignition energy adjustment means may execute a re-discharge by the spark plug in a case where the turbulence intensity index value is equal to or less than a second predetermined value and the ignition timing is later than a fourth predetermined value.

Therefore, with respect to a cycle in which it is predicted that both starting and progression of combustion will occur too slowly because the turbulence intensity index value is too small and the ignition timing is too late, growth of the flame kernel can be promoted by increasing the ignition energy supplied to the spark plug by means of a re-discharge, and as a result the subsequent burning velocity can be increased. Thus, combustion variations can be suppressed.

Further, the above described one aspect of the present invention may also include a second spark plug for igniting an air-fuel mixture in the cylinder, and ignition timing detection means for detecting an ignition timing of an air-fuel mixture, and the ignition energy adjustment means may execute a discharge by the second spark plug in a case where the turbulence intensity index value is equal to or less than a second predetermined value and the ignition timing is later than a fourth predetermined value.

Therefore, with respect to a cycle in which it is predicted that both starting and progression of combustion will occur too slowly because the turbulence intensity index value is too small and the ignition timing is too late, growth of the flame kernel can be promoted by increasing the ignition energy by multi-point ignition, and as a result the subsequent burning velocity can be increased. Thus, combustion variations can be suppressed.

The above described one aspect of the present invention may also include fuel injection control means for executing a fuel injection prior to the re-discharge by the spark plug.

Therefore, an air-fuel mixture in a cylinder can be reliably combusted by utilizing the above described fuel injection and re-discharge. It is thereby possible to prevent a situation arising in which the flame kernel does not grow appropriately and misfiring occurs. Thus, torque fluctuations can be suppressed.

Further, the above described one aspect of the present invention may also include fuel injection control means for executing a fuel injection prior to a discharge by the second spark plug.

Therefore, an air-fuel mixture in a cylinder can be reliably combusted by utilizing the above described fuel injection and multi-point ignition. It is thereby possible to prevent a situation arising in which the flame kernel does not grow appropriately and misfiring occurs. Thus, torque fluctuations can be suppressed.

In addition, the above described one aspect of the present invention may further include spark timing control means for analyzing a distribution of the turbulence intensity index values that are calculated in a plurality of cycles under an identical operating state, and controlling a spark timing in an operating state in which the analysis is performed so as to be an optimum spark timing that is based on a result of the distribution analysis.

Therefore, the spark timing can be controlled to an optimum spark timing in accordance with a state of a distribution of turbulence intensity index values that are calculated in a plurality of cycles under an identical operating state. Consequently, even in a case where changes over time arise in the turbulence of an air-fuel mixture in a cylinder due to changes over time in the internal combustion engine, a deterioration in fuel efficiency that is caused by changes over time in the turbulence of the air-fuel mixture can be suppressed.

The above described one aspect of the present invention may further include gas flow strengthening means for analyzing a distribution of the turbulence intensity index values that are calculated in a plurality of cycles under an identical operating state, and strengthening a turbulence of in-cylinder gas in an operating state in which the analysis is performed based on a result of the distribution analysis.

Therefore, as a measure for ensuring that the turbulence of in-cylinder gas becomes an appropriate strength, strengthening of the turbulence is performed as necessary based on the state of a distribution of turbulence intensity index values that are calculated in a plurality of cycles under an identical operating state. Consequently, even in a case where the turbulence of in-cylinder gas decreases due to changes over time in the internal combustion engine, since the burning velocity can be increased (restored), it is possible to suppress the occurrence of a situation in which combustion variations increase.

The above described one aspect of the present invention may also include fuel amount increase execution means for analyzing a distribution of the turbulence intensity index values that are calculated in a plurality of cycles under an identical operating state at a time of lean-burn operation under an air-fuel ratio that is leaner than a stoichiometric air-fuel ratio and, based on a result of the distribution analysis, increasing a fuel injection amount in an operating state in which the analysis is performed at a time of the lean-burn operation.

Therefore, a fuel injection amount can be increased as necessary as a measure for stabilizing combustion, based on the state of a distribution of turbulence intensity index values that are calculated in a plurality of cycles under an identical operating state. Consequently, even in a case where the turbulence of in-cylinder gas decreases due to changes over time in the internal combustion engine, since the burning velocity can be increased (restored) by enriching the in-cylinder air-fuel ratio, the occurrence of a situation in which combustion variations increase during lean-burn operation can be suppressed.

The above described one aspect of the present invention may further include exhaust gas recirculation control means for analyzing a distribution of the turbulence intensity index values that are calculated in a plurality of cycles under an identical operating state, and lowering an exhaust gas recirculation rate in an operating state in which the analysis is performed based on a result of the distribution analysis.

Therefore, an exhaust gas recirculation rate can be decreased as necessary as a measure for stabilizing combustion, based on the state of a distribution of turbulence intensity index values that are calculated in a plurality of cycles under an identical operating state. Consequently, even in a case where the turbulence of in-cylinder gas decreases due to changes over time in the internal combustion engine, since the burning velocity can be increased (restored) by decreasing the exhaust gas recirculation rate, the occurrence of a situation in which combustion variations increase when introducing recirculated exhaust gas can be suppressed.

Another aspect of the present invention is a control apparatus for an internal combustion engine that includes a spark plug, discharge voltage measurement means, and estimation means.

The spark plug is a member for igniting an air-fuel mixture in a cylinder. The discharge voltage measurement means measures a discharge voltage of the spark plug. The estimation means estimates a turbulent burning velocity that is a burning velocity in a turbulent flow state of an air-fuel mixture in the cylinder based on a predetermined frequency component that is extracted from a discharge voltage during at least a part of a discharge duration leading up to ignition.

It was found that, due to the influence of the turbulence of in-cylinder gas, a predetermined frequency component is superimposed on a discharge voltage during a discharge duration leading up to ignition. Further, the turbulence intensity of in-cylinder gas is a principal factor that determines a turbulent burning velocity that is a burning velocity in a turbulent flow state of an air-fuel mixture in a cylinder. Therefore, according to the above described other aspect of the present invention, by measuring the discharge voltage during at least a part of the relevant discharge duration and acquiring a predetermined frequency component that is extracted from the measured discharge voltage, a turbulent burning velocity can be estimated rapidly (more specifically, at a timing before combustion begins to actually proceed).

The predetermined frequency component in the above described other aspect of the present invention may be a frequency component of a high frequency band that is equal to or greater than a predetermined frequency.

It is thereby possible to utilize the discharge voltage of a spark plug to suitably estimate a turbulent burning velocity that is a burning velocity in a turbulent flow state of an air-fuel mixture in a cylinder.

The estimation means in the above described other aspect of the present invention may calculate a turbulence intensity index value that indicates a turbulence intensity of in-cylinder gas based on the predetermined frequency component, and estimate the turbulent burning velocity based on the turbulence intensity index value that is calculated.

Therefore, after calculating a turbulence intensity index value that indicates a turbulence intensity of in-cylinder gas based on the aforementioned predetermined frequency component, a turbulent burning velocity can be accurately estimated based on the calculated turbulence intensity index value.

The above described other aspect of the present invention may further include ignition energy adjustment means for adjusting, in accordance with the turbulent burning velocity, an ignition energy that is supplied to the spark plug during a combustion duration in a cycle in which the turbulent burning velocity is estimated.

The turbulent burning velocity, with respect to which the turbulence intensity of in-cylinder gas is a principal factor, is a dominant factor in the step of "flame propagation" during combustion in a cylinder. According to the present invention, the ignition energy that is supplied to a spark plug is adjusted during a combustion duration in the cycle in which the turbulence intensity index value is estimated, in accordance with the turbulent burning velocity that is the aforementioned factor. By performing this control in each cycle, the growth of the flame kernel in each cycle can be controlled in accordance with the level of the turbulence intensity in each cycle, and thus combustion variations among cycles can be effectively suppressed.

The ignition energy adjustment means in the above described other aspect of the present invention may stop a discharge by the spark plug in a case where the turbulent burning velocity is equal to or greater than a fifth predetermined value.

Therefore, with respect to a cycle in which it is predicted that combustion will proceed too rapidly because the turbulent burning velocity is too high, it is possible to suppress growth of the flame kernel by decreasing the ignition energy supplied to the spark plug, and thereby suppress the subsequent burning velocity. Thus, combustion variations can be suppressed.

Further, the ignition energy adjustment means in the above described other aspect of the present invention may execute a re-discharge by the spark plug in a case where the turbulent burning velocity is equal to or less than a sixth predetermined value.

Therefore, with respect to a cycle in which it is predicted that combustion will proceed too slowly because the turbulent burning velocity is too low, it is possible to promote growth of the flame kernel by increasing the ignition energy supplied to the spark plug by performing a re-discharge, and thereby increase the subsequent burning velocity. Thus, combustion variations can be suppressed.

The above described other aspect of the present invention may further include a second spark plug for igniting an air-fuel mixture in the cylinder, and the ignition energy adjustment means may execute a discharge by the second spark plug in a case where the turbulent burning velocity is equal to or less than a sixth predetermined value.

Therefore, with respect to a cycle in which it is predicted that combustion will proceed too slowly because the turbulent burning velocity is too low, growth of the flame kernel can be promoted by increasing the ignition energy by multi-point ignition, and thus the subsequent burning velocity can be increased. Consequently, combustion variations can be suppressed.

Further, the above described other aspect of the present invention may also include ignition timing detection means for detecting an ignition timing of an air-fuel mixture, and the ignition energy adjustment means may stop a discharge by the spark plug in a case where the turbulent burning velocity is equal to or greater than a fifth predetermined value and the ignition timing is earlier than a seventh predetermined value.

Therefore, with respect to a cycle in which it is predicted that both starting and progression of combustion will occur too rapidly because the turbulent burning velocity is too high and the ignition timing is too early, growth of the flame kernel can be suppressed by decreasing the ignition energy supplied to the spark plug, and as a result the subsequent burning velocity can be suppressed. Thus, combustion variations can be suppressed.

The above described other aspect of the present invention may further include ignition timing detection means for detecting an ignition timing of an air-fuel mixture, and the ignition energy adjustment means may execute a re-discharge by the spark plug in a case where the turbulent burning velocity is equal to or less than a sixth predetermined value and the ignition timing is later than an eighth predetermined value.

Therefore, with respect to a cycle in which it is predicted that both starting and progression of combustion will occur too slowly because the turbulent burning velocity is too low and the ignition timing is too late, growth of the flame kernel can be promoted by increasing the ignition energy supplied to the spark plug by means of a re-discharge, and as a result the subsequent burning velocity can be increased. Thus, combustion variations can be suppressed.

Furthermore, the above described other aspect of the present invention may also include a second spark plug for igniting an air-fuel mixture in the cylinder, and ignition timing detection means for detecting an ignition timing of an air-fuel mixture, and the ignition energy adjustment means may execute a discharge by the second spark plug in a case where the turbulent burning velocity is equal to or less than a sixth predetermined value and the ignition timing is later than an eighth predetermined value.

Therefore, with respect to a cycle in which it is predicted that both starting and progression of combustion will occur too slowly because the turbulent burning velocity is too low and the ignition timing is too late, growth of the flame kernel can be promoted by increasing the ignition energy by multi-point ignition, and as a result the subsequent burning velocity can be increased. Thus, combustion variations can be suppressed.

In addition, the above described other aspect of the present invention may also include fuel injection control means for executing a fuel injection prior to the re-discharge by the spark plug.

Therefore, an air-fuel mixture in a cylinder can be reliably combusted by utilizing the above described fuel injection and re-discharge. It is thereby possible to prevent a situation arising in which the flame kernel does not grow appropriately and misfiring occurs. Thus, torque fluctuations can be suppressed.

The above described other aspect of the present invention may further include fuel injection control means for executing a fuel injection prior to a discharge by the second spark plug.

Therefore, an air-fuel mixture in a cylinder can be reliably combusted by utilizing the above described fuel injection and multi-point ignition. It is thereby possible to prevent a situation arising in which the flame kernel does not grow appropriately and misfiring occurs. Thus, torque fluctuations can be suppressed.

The above described other aspect of the present invention may also include spark timing control means for analyzing a distribution of the turbulent burning velocities that are calculated in a plurality of cycles under an identical operating state, and controlling a spark timing in an operating state in which the analysis is performed so as to be an optimum spark timing that is based on a result of the distribution analysis.

Therefore, the spark timing can be controlled to an optimum spark timing in accordance with a state of a distribution of turbulent burning velocities that are calculated in a plurality of cycles under an identical operating state. Consequently, even in a case where changes over time arise in the turbulence of an air-fuel mixture in a cylinder due to changes over time in the internal combustion engine, a deterioration in fuel efficiency that is caused by changes over time in the turbulence of an air-fuel mixture can be suppressed.

The above described other aspect of the present invention may further include gas flow strengthening means for analyzing a distribution of the turbulent burning velocities that are calculated in a plurality of cycles under an identical operating state, and strengthening a turbulence of in-cylinder gas in an operating state in which the analysis is performed based on a result of the distribution analysis.

Therefore, as a measure for ensuring the turbulent burning velocity becomes an appropriate velocity, strengthening of the turbulence is performed as necessary based on the state of a distribution of turbulent burning velocities that are calculated in a plurality of cycles under an identical operating state. Consequently, even in a case where the turbulence of in-cylinder gas decreases due to changes over time in the internal combustion engine, since the burning velocity can be increased (restored), it is possible to suppress the occurrence of a situation in which combustion variations increase.

The above described other aspect of the present invention may also include fuel amount increase execution means for analyzing a distribution of the turbulent burning velocities that are calculated in a plurality of cycles under an identical operating state at a time of lean-burn operation under an air-fuel ratio that is leaner than a stoichiometric air-fuel ratio and, based on a result of the distribution analysis, increasing a fuel injection amount in an operating state in which the analysis is performed at a time of the lean-burn operation.

Therefore, a fuel injection amount can be increased as necessary as a measure for stabilizing combustion, based on the state of a distribution of turbulent burning velocities that are calculated in a plurality of cycles under an identical operating state. Consequently, even in a case where the turbulence of in-cylinder gas decreases due to changes over time in the internal combustion engine, since the burning velocity can be increased (restored) by enriching the in-cylinder air-fuel ratio, the occurrence of a situation in which combustion variations increase during lean-burn operation can be suppressed.

Furthermore, the above described other aspect of the present invention may further include exhaust gas recirculation control means for analyzing a distribution of the turbulent burning velocities that are calculated in a plurality of cycles under an identical operating state, and lowering an exhaust gas recirculation rate in an operating state in which the analysis is performed based on a result of the distribution analysis.

Therefore, an exhaust gas recirculation rate can be decreased as necessary as a measure for stabilizing combustion, based on the state of a distribution of turbulent burning velocities that are calculated in a plurality of cycles under an identical operating state. Consequently, even in a case where the turbulence of in-cylinder gas decreases due to changes over time in the internal combustion engine, since the burning velocity can be increased (restored) by decreasing the exhaust gas recirculation rate, the occurrence of a situation in which combustion variations increase when introducing recirculated exhaust gas can be suppressed.

**Brief Description of Drawings**

Figure 1 is a schematic view for describing the system configuration of an internal combustion engine according to a first embodiment of the present invention;
Figure 2 is a schematic view illustrating the configuration of an ignition device shown in Figure 1;
Figure 3 is a view that illustrates the relation between a duration in which the combustion mass rate is between 10 and 90% and the turbulence intensity of air-fuel mixture;
Figure 4 is a view in which the turbulence of in-cylinder gas is conceptually represented;
Figure 5 is a view that illustrates an example of measuring a gas flow in a cylinder at a measurement point (vicinity of a spark plug) shown in Figure 4;
Figure 6 is a view for describing changes in a discharge path length in response to changes in the flow velocity of gas in the vicinity of a spark plug, in which a first spark plug is taken as an example;
Figure 7 is a view that represents the relation between a secondary voltage that is applied to the first spark plug and time;
Figure 8 is a view that represents a relation between time and a voltage waveform of a turbulence-equivalent component that is extracted from the discharge voltage during an inductive discharge duration leading up to ignition (duration from time point t2 to time point t3);
Figure 9 is a view that represents a time waveform of a turbulence intensity index value that is based on a discharge voltage and that is calculated using equation (1);
Figure 10 is a flowchart of a routine that is executed in the first embodiment of the present invention;
Figure 11 is a view illustrating a comparison between differences in predicted combustion patterns in accordance with the circumstances of the ignition timing and the level of the turbulence intensity index value, in which the comparison is performed utilizing heat release rates;
Figure 12 is a view that represents changes over time in the discharge current (secondary current) in a case where inductive discharge is stopped partway through the discharge operation;
Figure 13 is a view that represents a change in the heat release rate that is caused by stopping the inductive discharge partway through the discharge operation;
Figure 14 is a flowchart of a routine that is executed in the second embodiment of the present invention;
Figure 15 is a flowchart of a routine that is executed in the third embodiment of the present invention;
Figure 16 is a flowchart of a routine that is executed in the fourth embodiment of the present invention;
Figure 17 is a flowchart of a routine that is executed in the fifth embodiment of the present invention;
Figure 18 is a flowchart of a routine that is executed in the sixth embodiment of the present invention; and
Figure 19 is a flowchart of a routine that is executed in the seventh embodiment of the present invention.

**Description of Embodiments**

First Embodiment

[Explanation of System Configuration]

(Configuration of internal combustion engine)

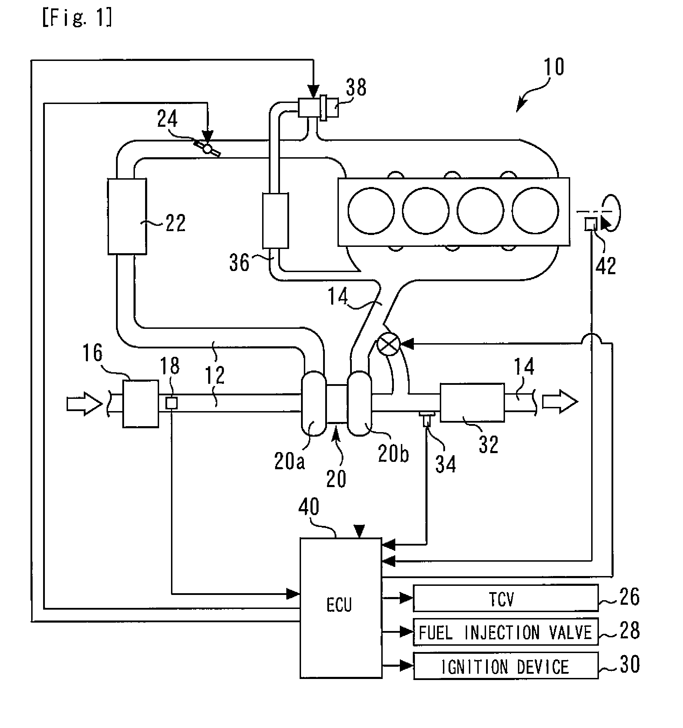

Figure 1 is a schematic view for describing the system configuration of an internal combustion engine 10 according to a first embodiment of the present invention. A system of the present embodiment includes a spark ignition-type internal combustion engine (in this case, as one example, it is assumed that the engine is a gasoline engine) 10. An intake passage 12 and an exhaust passage 14 communicate with each cylinder of the internal combustion engine 10.
An air cleaner 16 is installed in the vicinity of an inlet of the intake passage 12. An air flow meter 18 that outputs a signal in accordance with a flow rate of air that is drawn into the intake passage 12 is provided in the vicinity of the air cleaner 16 on a downstream side thereof. A compressor 20a of a turbo-supercharger 20 is arranged downstream of the air flow meter 18. The compressor 20a is integrally connected through a connecting shaft with a turbine 20b arranged in the exhaust passage 14.

An intercooler 22 that cools compressed air is provided on a downstream side of the compressor 20a. An electronically controlled throttle valve 24 is provided downstream of the intercooler 22. A tumble control valve (TCV) 26 is provided in the intake passage 12 at a position that is after a position at which the intake passage 12 branches towards the respective cylinders. The TCV 26 is a valve for controlling the flow of intake air (more specifically, for generating a tumble flow (a vertical swirl flow) in the cylinders).

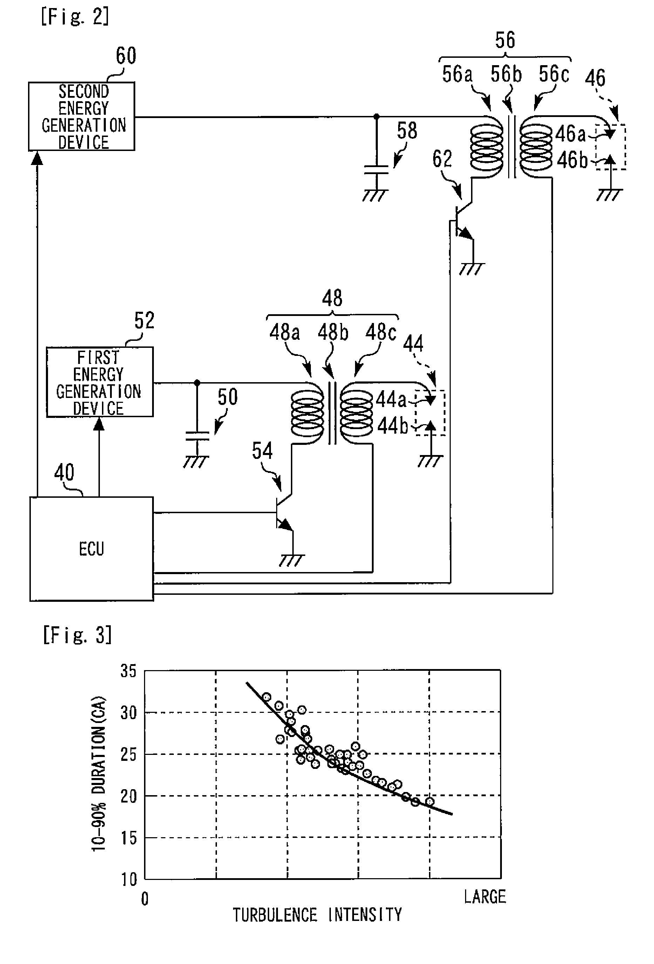

Each cylinder of the internal combustion engine 10 is provided with a fuel injection valve 28 for injecting fuel directly into the cylinder. The internal combustion engine 10 is also equipped with an ignition device 30 that includes a first spark plug 44 and a second spark plug 46 (see Figure 2) for igniting an air-fuel mixture in each cylinder. An example of the specific configuration of the ignition device 30 is described later referring to Figure 2.

A catalyst 32 for purifying exhaust gas is arranged at a location that is on a downstream side relative to the turbine 20b in the exhaust passage 14. An air-fuel ratio sensor 34 for detecting the air-fuel ratio of exhaust gas that flows into the catalyst 32 is arranged on an upstream side relative to the catalyst 32 in the exhaust passage 14.

The internal combustion engine 10 also includes an EGR (exhaust gas recirculation) passage 36 that connects the intake passage 12 on the downstream side of the throttle valve 24 with the exhaust passage 14. An EGR valve 38 for opening and closing the EGR passage 36 is provided in the vicinity of a connection port on the intake passage 12 side in the EGR passage 36. By changing the degree of opening of the EGR valve 38, the flow rate of exhaust gas (EGR gas) flowing through the EGR passage 36 can be changed to adjust the EGR rate.

The system illustrated in Figure 1 further includes an ECU (electronic control unit) 40. In addition to the aforementioned air flow meter 18 and air-fuel ratio sensor 34, various sensors for detecting the operating state of the internal combustion engine 10, such as a crank angle sensor 42 for detecting the engine speed, are connected to an input portion of the ECU 40. Various actuators for controlling the operating state of the internal combustion engine 10, such as the aforementioned throttle valve 24, TCV 26, fuel injection valve 28, ignition device 30 and EGR valve 38 are connected to an output portion of the ECU 40. The ECU 40 performs predetermined engine control such as fuel injection control and ignition control by actuating the various actuators in accordance with the output of the various sensors described above and predetermined programs.

(Configuration of ignition device)

Figure 2 is a schematic view illustrating the configuration of the ignition device 30 shown in Figure 1.

The ignition device 30 includes two spark plugs, namely, the first spark plug 44 and the second spark plug 46, for each cylinder of the internal combustion engine 10. The first spark plug 44 is mounted at a center portion of a ceiling wall of a combustion chamber. The second spark plug 46 is mounted at an edge portion of the ceiling wall. During operation of the internal combustion engine 10, the first spark plug 44 is used as a principal spark plug, and the second spark plug 46 is used in an auxiliary manner as required.

As shown in Figure 2, for the first spark plug 44, the ignition device 30 includes a first ignition coil 48, a first capacitor 50, a first energy generation device 52 and a first transistor 54. Similarly, for the second spark plug 46, the ignition device 30 includes a second ignition coil 56, a second capacitor 58, a second energy generation device 60 and a second transistor 62.

The first spark plug 44 has a center electrode 44a and a ground electrode 44b that are arranged so as to project into the cylinder from the center portion of the ceiling wall. The first ignition coil 48 has a primary coil 48a and a secondary coil 48c. The secondary coil 48c shares an iron core 48b with the primary coil 48a. The center electrode 44a is connected to one end of the secondary coil 48c. The ground electrode 44b is grounded at a cylinder head. The other end of the secondary coil 48c is connected to the ECU 40.

The first capacitor 50 is provided for storing electrical energy of a primary current that circulates through the primary coil 48a. One end of the first capacitor 50 is connected to one end of the primary coil 48a and the first energy generation device 52, and the other end thereof is grounded.

The first energy generation device 52 includes a power source, and supplies electrical energy to the first capacitor 50 in accordance with a command from the ECU 40. It is thereby possible to store (get) a predetermined electrical charge in the first capacitor 50.

A collector of the first transistor 54 is connected to the other end of the primary coil 48a, a base thereof is connected to the ECU 40, and an emitter thereof is grounded. In the first transistor 54, the section between the collector and the emitter enters a short-circuit ("on") state when a signal current flows to the emitter from the base in accordance with control by the ECU 40. It is thereby possible to feed a primary current to the primary coil 48a. Thus, by controlling the first transistor 54, the ECU 40 can control feeding and interruption of a primary current that flows to the primary coil 48a.

If the primary current to the primary coil 48a is interrupted, a high secondary voltage is generated in the secondary coil 48c by a mutual inductive action. The generated secondary voltage is applied to the first spark plug 44. When the secondary voltage applied from the secondary coil 48c reaches a value (required voltage) that is necessary for dielectric breakdown between the center electrode 44a and the ground electrode 44b, a current flows between the electrodes 44a and 44b (that is, an electrical discharge occurs), and a spark (electric spark) is generated in a gap between the electrodes 44a and 44b (a so-called "spark gap").

The contents of the specific configuration (that is, the second ignition coil 56, the second capacitor 58, the second energy generation device 60 and the second transistor 62) for causing a secondary voltage to be applied between the center electrode 46a and the ground electrode 46b of the second spark plug 46 are the same as the above described contents of the configuration of the first spark plug 44, and therefore a detailed description thereof is omitted.

According to the ignition device 30 described above, spark timings and discharge durations of the spark plugs 44 and 46 can be controlled by the ECU 40 by controlling the energy generation devices 52 and 60 and the transistors 54 and 62. Further, the ECU 40 is configured to be capable of measuring the secondary voltage (discharge voltage) of the secondary coil 48c that is applied to the first spark plug 44, using a voltage probe that is not illustrated in the drawings (the same also applies with respect to the second spark plug 46 side).

[Characteristic Control in First Embodiment]

(Three steps of in-cylinder combustion)

Combustion in a cylinder of an internal combustion engine occurs in three steps, namely, "ignition" (that is, a step in which an air-fuel mixture lights), "growth of the flame kernel" (that is, a step in which the flame grows to a size at which it is possible for the flame to propagate by itself), and "flame propagation" (that is, a step in which the flame spontaneously spreads as a result of turbulence or expansion of the in-cylinder gas). More specifically, the principal factors that determine the rapidity of "ignition" in each cycle are the ignition energy that is supplied to a spark plug (energy supplied by capacitive discharge and a small amount of inductive discharge), as well as the flow velocity of the air-fuel mixture and the air-fuel ratio in the vicinity of the spark plug. The principal factors that determine whether the "growth of the flame kernel" is favorable or poor are the ignition energy (energy supplied by means of inductive discharge) and cooling loss of the flame.

The principal factors that determine the "flame propagation" are the turbulence intensity of the in-cylinder gas (air-fuel mixture), the distribution of the in-cylinder air-fuel mixture, and the in-cylinder temperature. Among these factors, the turbulence intensity of the air-fuel mixture is the dominant factor that determines the quality of the "flame propagation". Figure 3 is a view that illustrates the relation between a duration in which the combustion mass rate is between 10 and 90% and the turbulence intensity of the air-fuel mixture. A duration in which the combustion mass rate is between 10 and 90% that is the main combustion duration corresponds to the "flame propagation" step. As shown in Figure 3, the main combustion duration becomes shorter as the turbulence intensity of the air-fuel mixture increases. Furthermore, in an in-cylinder direct injection type internal combustion engine such as the internal combustion engine 10, although the turbulence intensity is an important factor that determines the quality of "flame propagation" at a time of stratified combustion also that is performed by forming an air-fuel mixture layer which is richer than in a surrounding area in the vicinity of a spark plug, in particular the turbulence intensity is the dominant factor at a time of homogeneous combustion that is performed in a situation in which the air-fuel mixture inside the entire cylinder is evenly mixed.

As described above, respectively different factors are dominant in the three steps of combustion. Therefore, if only the rapidity of the ignition timing is detected, the turbulent burning velocity in the principal combustion duration (that is, a duration of flame propagation by means of a turbulent flow) of the relevant cycle cannot be predicted. Further, although a technique that detects a combustion state using an in-cylinder pressure sensor is known, this technique acquires the velocity of a combustion that was actually performed, and the technique is unable to estimate a turbulence intensity or a turbulent burning velocity, for which the turbulence intensity is a principal factor, at a timing before combustion actually starts to proceed.

Suppressing combustion variations between cycles is important for improving exhaust emission performance and fuel efficiency performance. For example, in an in-cylinder direct-injection internal combustion engine such as the internal combustion engine 10 of the present embodiment, in a case where lean-burn combustion is performed under a homogeneous in-cylinder air-fuel mixture distribution, if combustion in a certain cycle occurs too rapidly relative to an average cycle, a large amount of NOx will be emitted. Accordingly, a configuration is desirable in which, at a timing before combustion starts to actually proceed, the turbulence intensity of in-cylinder gas (state of flame propagation) in the relevant cycle can be predicted, and control can be performed that serves as a countermeasure that is in accordance with the prediction result.

(Technique for calculating turbulence intensity index value based on discharge voltage of spark plug)

Therefore, according to the present embodiment, as described hereunder, a configuration is adopted that, at a timing before combustion starts to actually proceed, utilizes the ignition device 30 that already exists in the internal combustion engine 10 to acquire a turbulence intensity index value that indicates the turbulence intensity of the air-fuel mixture based on a discharge voltage of the first spark plug 44.

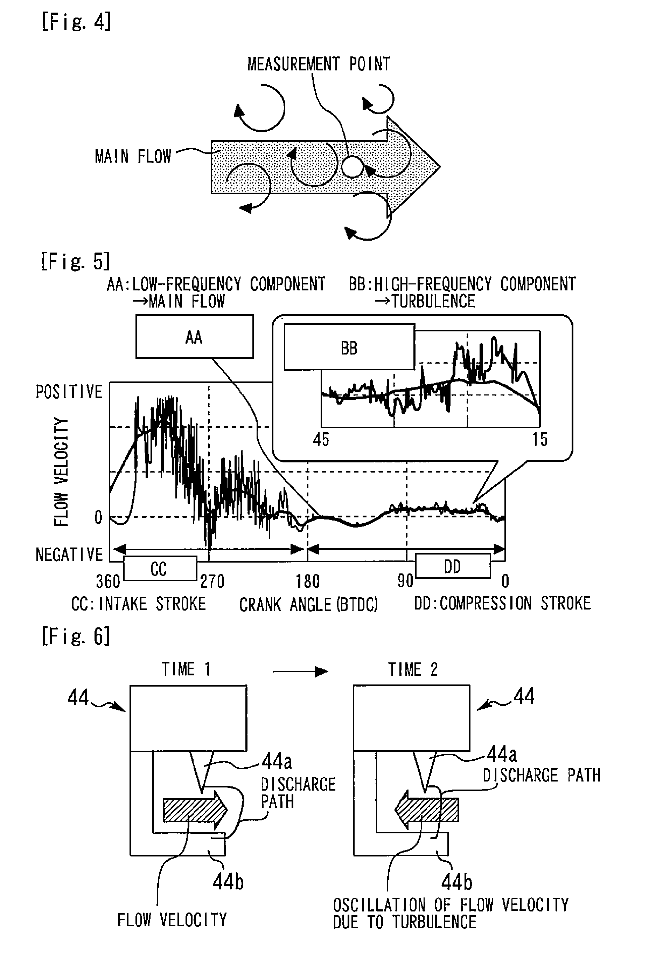

Figure 4 is a view in which the turbulence of in-cylinder gas is conceptually represented. Figure 5 is a view that illustrates an example of measuring a gas flow in a cylinder at a measurement point (vicinity of a spark plug) shown in Figure 4.

An arrow shown in Figure 4 represents the main flow in a flow field in a cylinder, and Figure 4 illustrates a flow field in which a plurality of small vortexes are drifted away on the main flow. When the flow velocity of gas at one point in this flow field is measured in a time-series manner, the result is as shown in Figure 5. That is, as shown in Figure 5, while a low-frequency component of the flow velocity corresponds to the main flow, on the other hand, at a latter stage of a compression stroke that is near to the spark timing also, due to the turbulence caused by vortexes accompanying the main flow, a waveform of the flow velocity oscillates at a frequency that is equal to or greater than a certain frequency (hereunder, referred to as "cut-off frequency of turbulence"). Thus, the turbulence of in-cylinder gas is not simply a fluctuation in the flow velocity of the gas, and a component of a specific frequency band (that is, a predetermined frequency component (more specifically, a high-frequency component that is greater than or equal to the aforementioned cut-off frequency)) of the flow velocity corresponds to the turbulence. That is, it can be said that a turbulence-equivalent component cannot be extracted from a discharge voltage unless the frequency is taken into consideration.

Figure 6 is a view for describing changes in a discharge path length in response to changes in the flow velocity of gas in the vicinity of a spark plug, in which the first spark plug 44 is taken as an example.

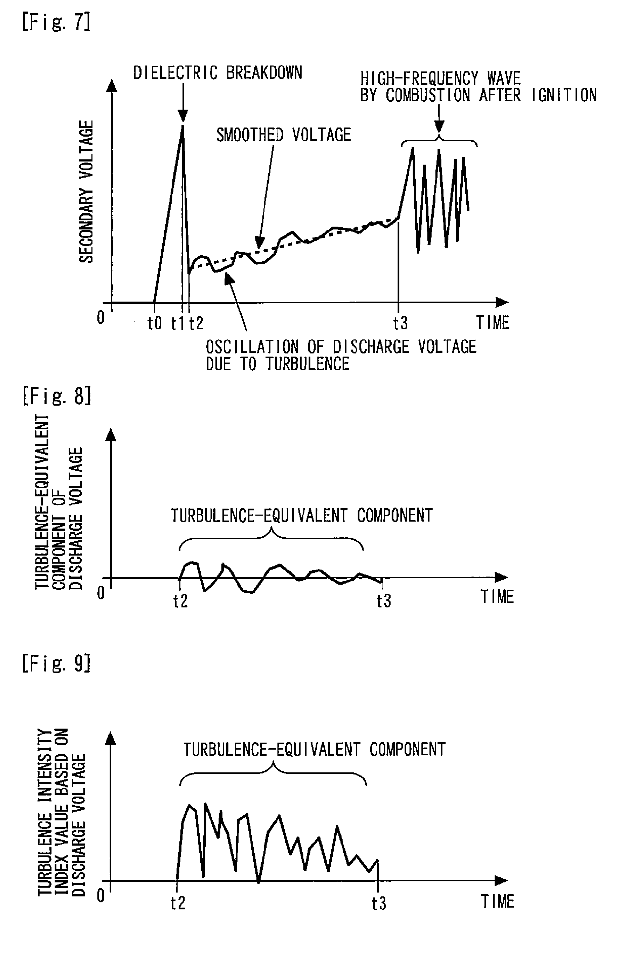

In the example illustrated in Figure 6 it is assumed that the flow velocity of gas in the vicinity of the electrodes 44a and 44b of the first spark plug 44 changes (oscillates) due to the existence of turbulence between a time 1 and a time 2 during a discharge duration. When turbulence arises in the gas flow in the vicinity of the electrodes 44a and 44b in this manner, the discharge path length of a spark changes as illustrated in Figure 6. As a result, a discharge voltage (secondary voltage) varies with time (oscillates) due to the influence of the turbulence in the gas flow (see Figure 7 that is described later). That is, it was found that a high-frequency component is superimposed on a time waveform of the discharge voltage of the first spark plug 44 due to the influence of turbulence similarly to the high-frequency component observed on the time waveform of the flow velocity of in-cylinder gas. Accordingly, it can be said that an index value that indicates the turbulence intensity of in-cylinder gas (hereunder, referred to as "turbulence intensity index value") based on the discharge voltage can be obtained by extracting a turbulence-equivalent component of in-cylinder gas (air-fuel mixture) that is included in an oscillating discharge voltage.

Figure 7 is a view that represents the relation between a secondary voltage that is applied to the first spark plug 44 and time.

A time point t0 in Figure 7 corresponds to a timing at which application of a secondary voltage to the first spark plug 44 starts accompanying interruption of a primary current that flows through the primary coil 48a of the first ignition coil 48 as a result of control of the first transistor 54 that is performed by the ECU 40. A time point t1 thereafter corresponds to a timing at which the secondary voltage that is applied to the first spark plug 44 reaches a voltage (required voltage) that is necessary for dielectric breakdown. At the time point t1 a spark arises between the electrodes 44a and 44b and discharge is started.

The discharge is divided into two forms. The initial discharge is caused by the release of electrical energy that was stored in the first capacitor 50 (so-called "capacitive discharge"). The duration of the capacitive discharge corresponds to what is actually an extremely short duration from the time point t1 to a time point t2. The discharge after the capacitive discharge ends (that is, after the time point t2) is caused by the release of electromagnetic energy that was stored in the secondary coil 48c (so-called "inductive discharge").

A time point t3 is the spark timing. The voltage waveform produced by inductive discharge oscillates to a large degree from the time point t3 onwards because of changes in the voltage that accompany changes in resistance that are due to the influence of the generation of ions and radicals that are generated after ignition. In the present embodiment a configuration is adopted so as to detect an ignition timing to be used in ignition control that is described later by ascertaining such changes in the discharge voltage that accompany ignition. Note that a technique for detecting the ignition timing is not limited to the above described technique. For example, a configuration may be adopted that detects the ignition timing by detecting an ion current that flows accompanying ignition by utilizing a known technique that utilizes the first spark plug 44 as an ion probe.

The oscillations in the discharge voltage caused by turbulence in the in-cylinder gas that are mentioned above are detected in a discharge duration leading up to ignition (before the time point t3), and in particular, as shown in Figure 7, in an inductive discharge duration from the start of inductive discharge until ignition (duration from the time point t2 to the time point t3). Further, a waveform illustrated by a broken line in Figure 7 is a voltage waveform obtained by executing a smoothing process using a moving average method with respect to the discharge voltage waveform during the duration in question, and it can be said that the waveform illustrated by the broken line corresponds to a value in which the size of the mean flow velocity (flow velocity of a main flow component) of the gas flow in the cylinder is reflected. Note that, as shown in Figure 7, since the discharge voltage waveform exhibits a conspicuous inflection point at the timing at which inductive discharge starts (time point t2), the timing at which inductive discharge starts can be ascertained by determining such an inflection point.

Figure 8 is a view that represents a relation between time and a voltage waveform of a turbulence-equivalent component that is extracted from the discharge voltage during an inductive discharge duration leading up to ignition (duration from time point t2 to time point t3). That is, the waveform illustrated in Figure 8 represents a time waveform of a turbulence-equivalent component extracted from the discharge voltage by taking a voltage value corresponding to the mean flow velocity represented by the broken line in Figure 7 as a reference (zero).

Similarly to the situation that can be observed in the time waveform of the flow velocity of the in-cylinder gas, a high-frequency component is superimposed on the time waveform of the discharge voltage of the first spark plug 44 also, due to the influence of turbulence as represented in Figure 8. Therefore, in the present embodiment a configuration is adopted that, with respect to a time waveform of the discharge voltage, applies knowledge for extracting a turbulence component from the flow velocity in a manner that takes into consideration a frequency band corresponding to the turbulence component, and acquires a frequency component of a high frequency band that is equal to or greater than a predetermined cut-off frequency from time-series data of the discharge voltage during an inductive discharge duration leading up to ignition as a turbulence-equivalent component of the in-cylinder gas (air-fuel mixture) in the vicinity of the first spark plug 44.

More specifically, according to the present embodiment a configuration is adopted that separates a frequency component of a high frequency band that is equal to or greater than the above described cut-off frequency from the time-series data of the discharge voltage during the inductive discharge duration (duration from the time point t2 to the time point t3) that extends from the start of inductive discharge until ignition that is obtained as shown in Figure 7 that is described above, and calculates a turbulence intensity index value that indicates the turbulence intensity of the in-cylinder gas. One example of a technique for calculating the turbulence intensity index value is described hereunder.

The technique for calculating the turbulence intensity index value described here utilizes a moving average value of the discharge voltage to separate a turbulence-equivalent component by excluding a component corresponding to the main flow component (mean flow velocity) of the gas flow in the vicinity of the first spark plug 44 from time-series data of the discharge voltage, and calculates a turbulence intensity index value as a standard deviation of the turbulence-equivalent component with respect to a mean flow velocity-equivalent component of the discharge voltage in accordance with the following equation (1).

$$\text{Turbulence intensity index value} = \left( \frac{1}{N-1} \sum_{i=1}^{N} (V(t_i) - V_{mean}(t_i))^2 \right)^{0.5} \quad ---- (1)$$

In the above equation (1), t represents time, N represents the number of data items, and V(t) represents the discharge voltage. $V_{mean}(t)$ represents a moving average value of the discharge voltage, and can be calculated according to the following equation (2). In the following equation (2), $\Delta t$ represents an averaging time width. Further, the following equation (3) is an equation for calculating $f_c$ that represents the aforementioned cut-off frequency. Note that, in the following equation (3), $\Delta \theta$ represents an averaging crank angle width, and n represents the engine speed.

$$V_{mean}(t) = \frac{1}{\Delta t} \int_{-\frac{2}{\Delta t}}^{\frac{2}{\Delta t}} V(t) \, dt \quad ---- (2)$$

$$f_c = \frac{1}{2\Delta t} = \frac{3n}{\Delta \theta} \quad ---- (3)$$

If the engine speed is high, components that constitute the main flow among the flow velocity of the air-fuel mixture increase. Consequently, according to the present embodiment a configuration is adopted that uses a cut-off frequency for extracting a turbulence-equivalent component of an air-fuel mixture in the vicinity of the first spark plug 44 (that is, a lower limit threshold value of a high frequency band corresponding to the turbulence) from the discharge voltage as a value that is proportional to the engine speed.

The procedure for calculating a turbulence intensity index value utilizing the above described equations (1) to (3) is as follows. That is, utilizing a map or the like that has been previously set, the ECU 40 acquires the cut-off frequency $f_c$ that is suitable for the engine speed at the time of acquiring the discharge voltage, and calculates the averaging time width $\Delta t$ by substituting the cut-off frequency $f_c$ into the above equation (3). Next, by substituting the calculated averaging time width $\Delta t$ into the above equation (2), the ECU 40 calculates a moving average value $V_{mean}(t)$ of the discharge voltage as a value in which the cut-off frequency $f_c$ that is suitable for the current operating state is reflected. The ECU 40 then calculates the turbulence intensity index value by substituting the calculated moving average value $V_{mean}(t)$ into the above equation (1).

Figure 9 is a view that represents a time waveform of a turbulence intensity index value that is based on a discharge voltage and that is calculated using the above equation (1).

By repeatedly executing an operation to calculate a turbulence intensity index value using the above equation (1) during the duration of inductive discharge from the start of discharge until ignition (duration from the time point t2 to the time point t3), a time waveform of the turbulence intensity index value as shown in Figure 9 can be obtained.

(Ignition control utilizing calculated turbulence intensity index value)

According to the above described technique, at a timing before combustion starts to actually proceed, a turbulence intensity index value that indicates the turbulence intensity of the air-fuel mixture that is the dominant factor that determines the quality of flame propagation thereafter in the same cycle can be acquired based on a high-frequency component extracted from the discharge voltage during an inductive discharge duration leading up to ignition.

Therefore, according to the present embodiment, a configuration is adopted that performs the ignition control described hereunder in each cycle using a turbulence intensity index value that is calculated in the respective cycles. According to the present embodiment, it is assumed as a premise that a spark ignition is executed using the first spark plug 44 when a predetermined spark timing is reached in the respective cylinders.

That is, in the present embodiment a configuration is adopted so that, when ignition is detected in each cycle, if the turbulence intensity index value calculated in the current cycle is equal to or greater than a first predetermined value, and the ignition timing that is detected in the current cycle is earlier than a third predetermined value, discharge (inductive discharge) by the first spark plug 44 in the current cycle is stopped. On the other hand, according to the present embodiment, a configuration is adopted so that, when ignition is detected in each cycle, if the turbulence intensity index value calculated in the current cycle is equal to or less than a second predetermined value, and the ignition timing that is detected in the current cycle is later than a fourth predetermined value, re-discharge by the first spark plug 44 is performed after discharge (inductive discharge) by the first spark plug 44 in the current cycle ends.

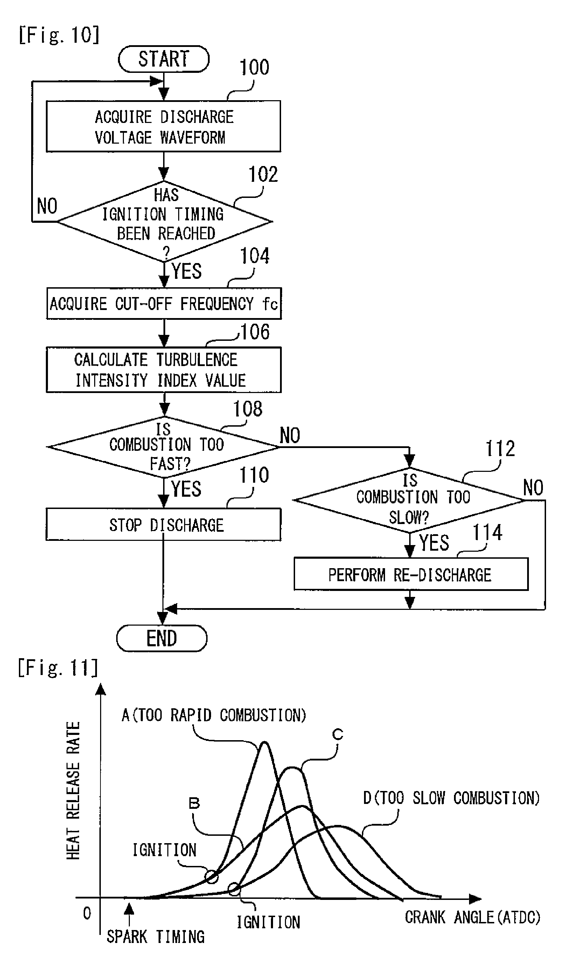

Figure 10 is a flowchart that illustrates a control routine that the ECU 40 executes to realize the characteristic ignition control in the first embodiment. Note that it is assumed that the present routine is started when a predetermined spark timing is reached in the respective cylinders, and is repeatedly executed for each predetermined control duration.

According to the routine shown in Figure 10, first the ECU 40 executes processing to acquire a discharge voltage waveform of the first spark plug 44 (step 100). Next, the ECU 40 utilizes the discharge voltage waveform that is currently being acquired to determine whether or not the ignition timing has been reached, based on whether or not a change occurred in the discharge voltage accompanying ignition (step 102). Acquisition of the discharge voltage in step 100 is repeatedly executed until ignition is detected in step 102.

If the ECU 40 detected ignition in step 102, the ECU 40 then acquires the cut-off frequency $f_c$ (step 104). The ECU 40 stores a map in which the cut-off frequency $f_c$ is defined in relation to the engine speed, and in the present step 104 the ECU 40 refers to the map to acquire the cut-off frequency $f_c$ that corresponds to the current engine speed.

Next, the ECU 40 utilizes the aforementioned technique using the above described equations (1) to (3) to calculate a turbulence intensity index value that is based on the discharge voltage waveform during the inductive discharge duration leading up to ignition (step 106). More specifically, the turbulence intensity index value in the state in which the turbulence intensity index value has been calculated by means of the aforementioned technique is obtained as a waveform that oscillates as shown in Figure 9. Therefore, in the present step 106, a value is used that is obtained by subjecting the waveform of the obtained turbulence intensity index values to time averaging with respect to the measurement duration of the waveform (the above described inductive discharge duration).

Next, the ECU 40 determines whether or not the turbulence intensity index value calculated in step 106 is greater than or equal to a first predetermined value, and the ignition timing detected in step 102 is earlier than a third predetermined value (step 108). The first predetermined value used in the present step 108 is a value that is previously set as a value corresponding to an upper limit value within a range of sizes of the turbulence intensity index value in an average cycle, and the third predetermined value used in the present step 108 is a value that is previously set as a value corresponding to an upper limit value within a range of the rapidity of the ignition timing in an average cycle.

If the result determined in step 108 is affirmative, that is, if it can be determined that combustion is too fast because the turbulence intensity index value in the current cycle is greater than a value in an average cycle and the ignition timing in the current cycle is earlier than a value in an average cycle, the ECU 40 executes processing that stops the inductive discharge by the first spark plug 44 that is currently in progress (step 110). Such processing for stopping the discharge can be performed, for example, by the ECU 40 controlling the first energy generation device 52 and the first transistor 54 so that the primary current is supplied again to the primary coil 48a. If the primary current is supplied again to the primary coil 48a, an induced current arises in the secondary coil 48c in the opposite direction to the induced current that is currently flowing therein. As a result, the discharge voltage can be suppressed to thereby stop the spark discharge by the first spark plug 44.

In contrast, if the result determined in step 108 is not affirmative, the ECU 40 determines whether or not the turbulence intensity index value calculated in step 106 is less than or equal to a second predetermined value, and the ignition timing detected in step 102 is later than a fourth predetermined value (step 112). The second predetermined value used in the present step 112 is a value that is previously set as a value corresponding to a lower limit value within a range of sizes of the average turbulence intensity index value, and the fourth predetermined value used in the present step 112 is a value that is previously set as a value corresponding to a lower limit value within a range of the rapidity of the average ignition timing.

If the result determined in step 112 is affirmative, that is, if it can be determined that combustion is too slow because the turbulence intensity index value in the current cycle is less than a value in an average cycle and the ignition timing in the current cycle is later than a value in an average cycle, the ECU 40 controls the first energy generation device 52 and the first transistor 54 so that re-discharge by the first spark plug 44 is performed after the inductive discharge by the first spark plug 44 ends (step 114). Such control can be performed, for example, by charging the first capacitor 50 after the first discharge is performed by the first spark plug 44, and thereafter performing supply and interruption of the primary current. Alternatively, such control may be implemented, for example, by adopting a configuration in which a plurality of ignition coils are provided for the first spark plug 44, and after the first discharge is performed, performing discharge that utilizes an unused other ignition coil.

According to the above described routine shown in Figure 10, in a case where the turbulence intensity index value is greater than a value in an average cycle and the ignition timing is earlier than a value in an average cycle, discharge by the first spark plug 44 is stopped partway through the discharge operation, and conversely, in a case where the turbulence intensity index value is less than a value in an average cycle and the ignition timing is later than a value in an average cycle, re-discharge is executed after the discharge by the first spark plug 44. Thus, according to the above described routine, after utilizing the level of a turbulence intensity index value obtained based on the discharge voltage of the first spark plug 44 and the circumstances of the ignition timing to predict a combustion pattern in a cycle in which the aforementioned parameters are acquired, the ignition energy in the relevant cycle is adjusted in accordance with the prediction result.

Figure 11 is a view illustrating a comparison between differences in predicted combustion patterns in accordance with the circumstances of the ignition timing and the level of the turbulence intensity index value, in which the comparison is performed utilizing heat release rates.

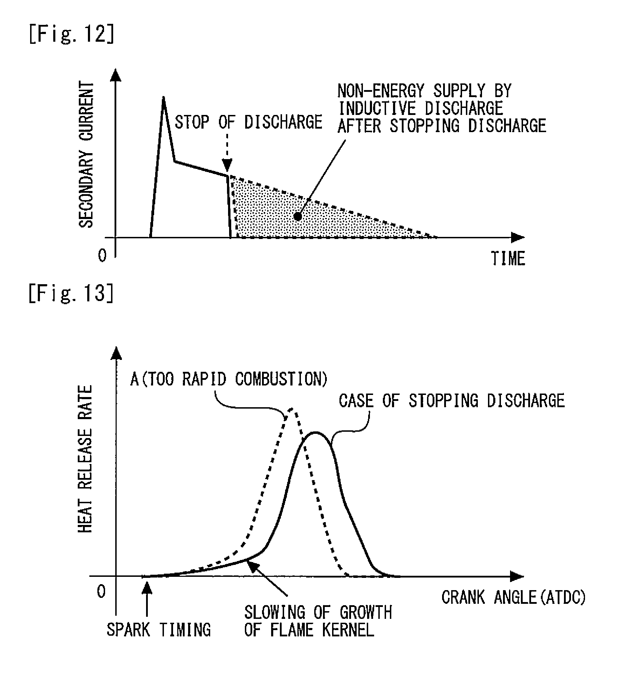

First, a waveform denoted by reference character "A" in Figure 11 is a waveform obtained under circumstances in which combustion proceeds rapidly because the ignition timing is earlier than a value in an average cycle and the turbulence intensity index value is greater than a value in the average cycle, and hence, as shown in Figure 13, the heat release rate starts to change too rapidly and the change in question is a sharp change. That is, in a cycle that has this waveform, both the start and progression of combustion occur too rapidly compared to an average cycle. Consequently, the combustion temperature becomes too high and the amount of discharged NOx increases.

Figure 12 is a view that represents changes over time in the discharge current (secondary current) in a case where inductive discharge is stopped partway through the discharge operation. Figure 13 is a view that represents a change in the heat release rate that is caused by stopping the inductive discharge partway through the discharge operation.

In the case of the combustion pattern "A" shown in Figure 11, in a case where inductive discharge is stopped partway through the discharge operation after ignition is detected (more specifically, during the "growth of the flame kernel" duration), as shown in Figure 12, the discharge current (secondary current) becomes zero, and energy released by the inductive discharge is no longer supplied to the first spark plug 44. That is, the ignition energy supplied to the first spark plug 44 is decreased. As a result, growth of the flame kernel is suppressed, and consequently the subsequent burning velocity is suppressed. Therefore, as shown in Figure 13, a change in the heat release rate becomes gentler in comparison to the state prior to implementing the above described measure (shown by broken line). Therefore, in a cycle in which the start and progression of combustion occur too rapidly, the combustion temperature can be prevented from becoming too high, and an increase in the amount of NOx emission can be suppressed.

Next, a waveform denoted by reference character "B" in Figure 11 is a waveform obtained under circumstances in which although the ignition timing is earlier than a value in the average cycle, the turbulence intensity index value is less than a value in the average cycle, and hence a change in the heat release rate is gentler compared to the waveform "A". Therefore, it can be said that the waveform "B" is within a range of waveforms of an average cycle. Further, a waveform denoted by reference character "C" in Figure 11 is a waveform obtained under circumstances in which although the ignition timing is later than a value in the average cycle, the turbulence intensity index value is greater than a value in the average cycle. Therefore, it can be said that the waveform "C" is also within a range of waveforms of an average cycle in terms of a change in the heat release rate. Therefore, according to the present embodiment, a special measure (adjustment of the ignition energy) is not implemented in these cases.

Finally, a waveform denoted by reference character "D" in Figure 11 is a waveform obtained under circumstances in which the ignition timing is later than a value in the average cycle and the turbulence intensity index value is less than a value in the average cycle. Hence, as shown in Figure 11, the heat release rate starts to change too late and the change in question is a gentle change. That is, in a cycle that has this waveform, both the start and progression of combustion occur too slowly compared to the average cycle. Consequently, the generated torque decreases and torque fluctuations deteriorate. In such a case, according to the above described routine, the ignition energy that is supplied to the first spark plug 44 is increased by executing a re-discharge after the discharge by the first spark plug 44. Thus, growth of the flame kernel is promoted and the subsequent burning velocity is increased. Therefore, in a cycle in which the start and progression of combustion occur too slowly, a decrease in generated torque can be prevented and torque fluctuations can be suppressed.

As described above, according to the control of the present embodiment, based on the ignition timing and the turbulence intensity index value, a combustion pattern (that is, the circumstances regarding "ignition" and "flame propagation" that are different steps of combustion) of the relevant cycle can be accurately predicted before combustion starts to actually proceed. Further, a measure (adjustment of the ignition energy supplied to the first spark plug 44) in accordance with the predicted combustion pattern of the relevant cycle can be swiftly performed at a timing at which the ignition is detected to thereby improve combustion in the cycle. In particular, when performing lean-burn combustion in the internal combustion engine 10, it is important to suppress combustion variations among cycles in order to expand the lean flammability limit. According to the control of the present embodiment, combustion variations among cycles can be effectively suppressed utilizing information (turbulence intensity index values) obtained utilizing the existing configuration (ignition device 30) of the internal combustion engine 10 without providing a dedicated sensor. Further, adverse effects (an increase in the amount of NOx discharge, torque fluctuations and the like) caused by such combustion variations can be prevented.

In the above described first embodiment, a configuration is adopted in which, by incorporating a processing program that utilizes the above described equations (1) to (3) into the ECU 40, a turbulence intensity index value (standard deviation of a turbulence-equivalent component with respect to a mean flow velocity-equivalent component of a discharge voltage) of the air-fuel mixture is calculated based on a predetermined frequency component (more specifically, a frequency component of a high frequency band that is greater than or equal to a predetermined cut-off frequency) that is extracted from time-series data of the discharge voltage during an inductive discharge duration leading up to ignition. However, calculation of a turbulence intensity index value may also be performed by adopting a configuration that includes another processor in addition to the ECU 40, and performing the calculation in accordance with a processing program incorporated into the other processor. Further, a configuration for extracting a frequency component of a high frequency band that is greater than or equal to a predetermined cut-off frequency from the discharge voltage during the inductive discharge duration leading up to ignition is not limited to a configuration employing the above described processing program, and a configuration may also be adopted that utilizes an arbitrary hardware or software configuration (for example, a high pass filter (HPF) or a fast Fourier transformation (FFT)). Further, as long as the turbulence intensity index value in the present invention is a value calculated by processing the above described frequency component of a high frequency band of the discharge voltage, apart from the value described above, an index value (for example, the amplitude of a frequency component of the high frequency band described above, an integrated value of a power spectrum of the high frequency band described above, or a power spectral density of the high frequency band) that indicates the intensity of a predetermined frequency component corresponding to turbulence (more specifically, a frequency component of the high frequency band described above) or the like may be used.

In addition, the turbulence intensity index value in the present invention may be, for example, a value that is calculated as the turbulence intensity of the air-fuel mixture itself using a discharge voltage in accordance with the procedure described hereunder. That is, first, similarly to the above described first embodiment, the ECU 40 acquires time-series data of the discharge voltage during the inductive discharge duration leading up to ignition. Next, the ECU 40 converts the discharge voltage to a flow velocity based on a previously stored relation (a map or the like) between the discharge voltage and the flow velocity of the air-fuel mixture in the vicinity of the first spark plug 44, to thereby acquire time-series data of the flow velocity during the aforementioned inductive discharge duration. Next, the ECU 40 uses the acquired time-series data of the flow velocity to calculate the turbulence intensity of the air-fuel mixture in accordance with the following equation (4).

$$\text{Turbulence intensity} = \left(\frac{1}{N-1}\sum_{i=1}^{N}(U(t_i)-U_{mean}(t_i))^2\right)^{0.5} \quad \text{----} (4)$$

The above equation (4) is the same as the above described equation (1) except that the discharge voltage V(t) and the moving average value $V_{mean}(t)$ of the discharge voltage are replaced by a flow velocity U(t) and a moving average

value $U_{mean}(t)$ of the flow velocity, respectively. As shown in the following equation (5), the moving average value $U_{mean}(t)$ of the flow velocity can be expressed as a relational expression that is based on the acquired time-series data of the flow velocity $U(t)$ and an averaging time width $\Delta t$ obtained by substituting the predetermined cut-off frequency $f_c$ that is suitable for the current engine speed into the above equation (3). As a result, the moving average value $U_{mean}(t)$ of the flow velocity can be calculated as a value in which the cut-off frequency $f_c$ that is suitable for the current operating state is reflected. Further, by substituting the moving average value $U_{mean}(t)$ of the flow velocity obtained by the equation (5) into the above described equation (4), a high-frequency component that corresponds to the turbulence can be extracted from the flow velocity of the air-fuel mixture in the vicinity of the first spark plug 44 obtained by conversion from the discharge voltage.

$$U_{mean}(t) \ = \ \frac{1}{\Delta t} \ \int_{-\frac{2}{\Delta t}}^{\frac{2}{\Delta t}} U(t)\, dt \qquad\qquad ---- ( 5 )$$

In the above first embodiment, an example is described in which a discharge voltage waveform is acquired by utilizing the entire inductive discharge duration leading up to ignition (duration from the time point t2 to the time point t3 shown in Figure 7). However, in the present invention it is sufficient that a discharge duration that utilizes a discharge voltage is a discharge duration leading up to ignition, and for example a configuration may also be adopted that uses only a part of an inductive discharge duration. Further, a predetermined frequency component that is extracted from the discharge voltage and is utilized as a turbulence-equivalent component may be a frequency component of an entire high frequency band that is greater than or equal to the predetermined cut-off frequency $f_c$, or may be a frequency component of a part of the aforementioned high frequency band.

Further, in the above described first embodiment, depending on the level of the turbulence intensity index value and the circumstances of the ignition timing that are obtained based on the discharge voltage of the first spark plug 44, adjustment of the ignition energy is performed by stopping a discharge of the first spark plug 44 or by a re-discharge of the first spark plug 44. However, a technique for adjusting the ignition energy in the present invention is not limited to the above described technique, and for example the following techniques may also be adopted. That is, a technique for increasing the ignition energy that is supplied may be a technique that, for example, controls the second energy generation device 60 and the second transistor 62 so that, after a first discharge by the first spark plug 44, the unused second spark plug 46 is used to execute a second discharge during the combustion duration. In addition, a technique for decreasing the ignition energy that is supplied may be a technique that, for example, in a case where a second discharge by the second spark plug 46 is scheduled to be performed after a first discharge by the first spark plug 44, cancels execution of the second discharge. Furthermore, the foregoing first embodiment has been described taking as an example the internal combustion engine 10 in which a single second spark plug 46 is provided in each cylinder. However, a configuration may also be adopted in which a plurality of second spark plugs that correspond to the second spark plug 46 are provided in each cylinder.

In addition, the foregoing first embodiment has been described by taking control that adjusts the ignition energy using the turbulence intensity index value together with the ignition timing as an example. However, the ignition control according to the present invention is not limited to the above described control, and may be control that adjusts the ignition energy based on only the turbulence intensity index value that is based on a high-frequency component (turbulence-equivalent component) of the discharge voltage, and does not use the ignition timing.

Note that, in the foregoing first embodiment, the "discharge voltage measurement means" in the above described one aspect of the present invention is realized by the ECU 40 executing the processing in the above described step 100, and the "ignition energy adjustment means" in the above described one aspect of the present invention is realized by the ECU 40 executing the processing in the above described step 110 or 114 in accordance with the result determined in the above described step 108 or 112.

Further, in the foregoing first embodiment, the first spark plug 44 corresponds to the "spark plug" in the above described one aspect of the present invention, and the second spark plug 46 corresponds to the "second spark plug" in the above described one aspect of the present invention.

In addition, in the above described first embodiment, the "ignition timing detection means" in the above described one aspect of the present invention is realized by the ECU 40 executing the processing in the above described step 102.

Second Embodiment

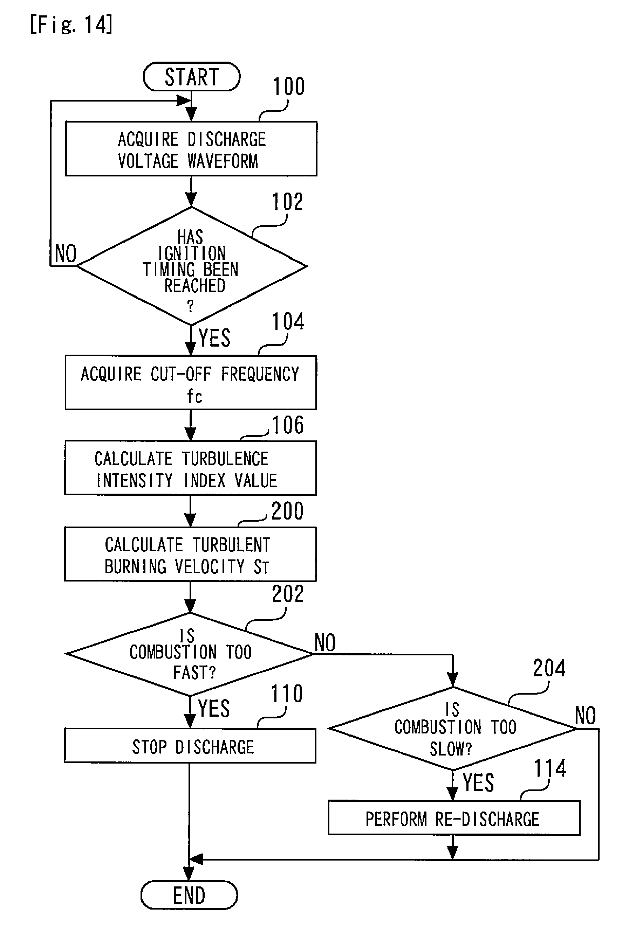

Next, a second embodiment of the present invention will be described referring mainly to Figure 14.

The system of the present embodiment can be realized by using the hardware configuration illustrated in Figure 1 and Figure 2, and causing the ECU 40 to execute the routine shown in Figure 14, described later, instead of the routine shown in Figure 10.

In the above described first embodiment, a configuration is adopted that, after calculating a turbulence intensity index value of the air-fuel mixture based on a predetermined frequency component (more specifically, a frequency component of a high frequency band that is equal to or greater than a predetermined cut-off frequency) extracted from time-series data of a discharge voltage during an inductive discharge duration leading up to ignition, adjusts the ignition energy in accordance with the level of the calculated turbulence intensity index value and circumstances of the ignition timing.

In contrast, according to the system of the present embodiment, a turbulent burning velocity that is a burning velocity in a turbulent flow state of an air-fuel mixture is estimated based on a turbulence intensity index value that is calculated using the aforementioned frequency component of the high frequency band of the discharge voltage by employing the technique utilized in the first embodiment. Thereafter, in the present embodiment, adjustment of the ignition energy is performed in accordance with the level of the estimated turbulent burning velocity and circumstances of the ignition timing.

A turbulent burning velocity $S_T$ can be calculated, for example, according to the empirical equation shown below. That is, the turbulent burning velocity $S_T$ can be expressed as shown in the following equation (6) using a laminar burning velocity $S_L$ and a turbulence intensity u'.

$$S_T = S_L + 1.8 S_L{}^{0.2} \times u'^{0.8} \quad \ldots (6)$$

Figure 14 is a flowchart that illustrates a control routine that the ECU 40 executes to realize the characteristic ignition control according to the second embodiment of the present invention. In Figure 14, steps that are the same as steps shown in Figure 10 according to the first embodiment are denoted by the same reference numerals, and a description of those steps is omitted or simplified.

In the routine illustrated in Figure 14, after calculating a turbulence intensity index value in step 106, the ECU 40 executes processing that calculates a turbulent burning velocity $S_T$ using the above described equation (6) (step 200). More specifically, the laminar burning velocity $S_L$ that is a burning velocity in a laminar flow state of the air-fuel mixture is a value that depends on in-cylinder temperature, in-cylinder pressure, and the equivalence ratio of the air-fuel mixture. The ECU 40 stores a map that defines the laminar burning velocity $S_L$ in relation to the in-cylinder temperature, the in-cylinder pressure and the air-fuel ratio, and in this case it is assumed that the ECU 40 refers to the map and calculates the laminar burning velocity $S_L$. As described above, the turbulence intensity index value calculated in step 106 is a value obtained as a standard deviation of a turbulence-equivalent component with respect to a mean flow velocity-equivalent component of the discharge voltage. A configuration may also be adopted so as to use this value (standard deviation of the turbulence-equivalent component of the discharge voltage) as the turbulence intensity u' in the above described equation (6) after the value has been converted to the turbulence intensity itself using a previously set relation (map or the like) (this corresponds to obtaining a turbulent burning velocity after calculating the turbulence intensity based on a turbulence-equivalent component (high-frequency component) of the discharge voltage). Alternatively, the aforementioned value (standard deviation of the turbulence-equivalent component of the discharge voltage) may be used as it is (this corresponds to obtaining a turbulent burning velocity directly based on a turbulence-equivalent component (high-frequency component) of the discharge voltage).

Next, the ECU 40 determines whether or not the turbulent burning velocity $S_T$ calculated in step 200 is greater than or equal to a fifth predetermined value, and the ignition timing detected in step 102 is earlier than a seventh predetermined value (step 202). The fifth predetermined value used in the present step 202 is a value that is previously set as a value corresponding to an upper limit value within a range of the turbulent burning velocity $S_T$ in an average cycle, and the seventh predetermined value used in the present step 202 is a value that is previously set as a value corresponding to an upper limit value within a range of the rapidity of the ignition timing in an average cycle.

If the result determined in step 202 is affirmative, that is, if it can be determined that combustion is too fast because the turbulent burning velocity $S_T$ in the current cycle is higher than a value in an average cycle and the ignition timing in the current cycle is earlier than a value in an average cycle, the ECU 40 executes processing that stops the inductive discharge by the first spark plug 44 that is currently in progress (step 110).

In contrast, if the result determined in step 202 is not affirmative, the ECU 40 determines whether or not the turbulent burning velocity $S_T$ calculated in step 200 is less than or equal to a sixth predetermined value, and the ignition timing detected in step 102 is later than an eighth predetermined value (step 204). The sixth predetermined value used in the present step 204 is a value that is previously set as a value corresponding to a lower limit value within a range of the turbulent burning velocity $S_T$ in an average cycle, and the eighth predetermined value used in the present step 204 is a value that is previously set as a value corresponding to a lower limit value within a range of the rapidity of the ignition timing in an average cycle.

If the result determined in step 204 is affirmative, that is, if it can be determined that combustion is too slow because the turbulent burning velocity $S_T$ in the current cycle is lower than a value in an average cycle and the ignition timing in the current cycle is later than a value in an average cycle, the ECU 40 controls the first energy generation device 52 and the first transistor 54 so that re-discharge by the first spark plug 44 is performed after the inductive discharge by the first spark plug 44 ends (step 114).

According to the routine shown in Figure 14 that is described above, the turbulent burning velocity $S_T$ can be estimated at a timing before combustion starts to actually proceed as a value that is based on a high-frequency component (turbulence-equivalent component) of the discharge voltage during the inductive discharge duration leading up to ignition. Further, unlike the routine illustrated in Figure 10 according to the first embodiment, by using the estimated turbulent burning velocity $S_T$ instead of the turbulence intensity index value, adjustment of the ignition energy is performed in accordance with the level of the turbulent burning velocity $S_T$ and the circumstances of the ignition timing. According to this technique also, based on the ignition timing and the turbulent burning velocity $S_T$, a combustion pattern (that is, the circumstances regarding "ignition" and "flame propagation" that are different steps of combustion) of the relevant cycle can be accurately predicted before combustion starts to actually proceed. Further, a measure (adjustment of the ignition energy supplied to the first spark plug 44) that is in accordance with the predicted combustion pattern of the relevant cycle can be swiftly performed at a timing at which the ignition is detected to thereby improve the combustion in the cycle. In addition, by using the turbulent burning velocity $S_T$ that also includes the laminar burning velocity $S_L$ (influence of in-cylinder temperature and in-cylinder pressure and the like) as well as the turbulence intensity u' (turbulence intensity index value), it can be said that the combustion pattern can be predicted more accurately in comparison to when employing the technique described in the first embodiment.

The second embodiment has been described above taking control that adjusts the ignition energy using the turbulent burning velocity $S_T$ together with the ignition timing as an example. However, the ignition control according to the present invention is not limited to the above described control, and may be control that performs adjustment of the ignition energy based on only the turbulent burning velocity that is based on a high-frequency component (turbulence-equivalent component) of the discharge voltage, and does not use the ignition timing.

Note that, in the foregoing second embodiment, the "discharge voltage measurement means" in the above described other aspect of the present invention is realized by the ECU 40 executing the processing in the above described step 100, and the "estimation means" in the above described other aspect of the present invention is realized by the ECU 40 executing the processing in the above described step 200.

Further, in the foregoing second embodiment, the first spark plug 44 corresponds to the "spark plug" in the above described other aspect of the present invention, and the second spark plug 46 corresponds to the "second spark plug" in the above described other aspect of the present invention.

In addition, in the foregoing second embodiment, the "ignition timing detection means" in the above described other aspect of the present invention is realized by the ECU 40 executing the processing in the above described step 102.

Further, in the foregoing second embodiment, the "ignition energy adjustment means" in the above described other aspect of the present invention is realized by the ECU 40 executing the processing in the above described step 110 or 114 in accordance with the result determined in the above described step 202 or 204.

Third Embodiment

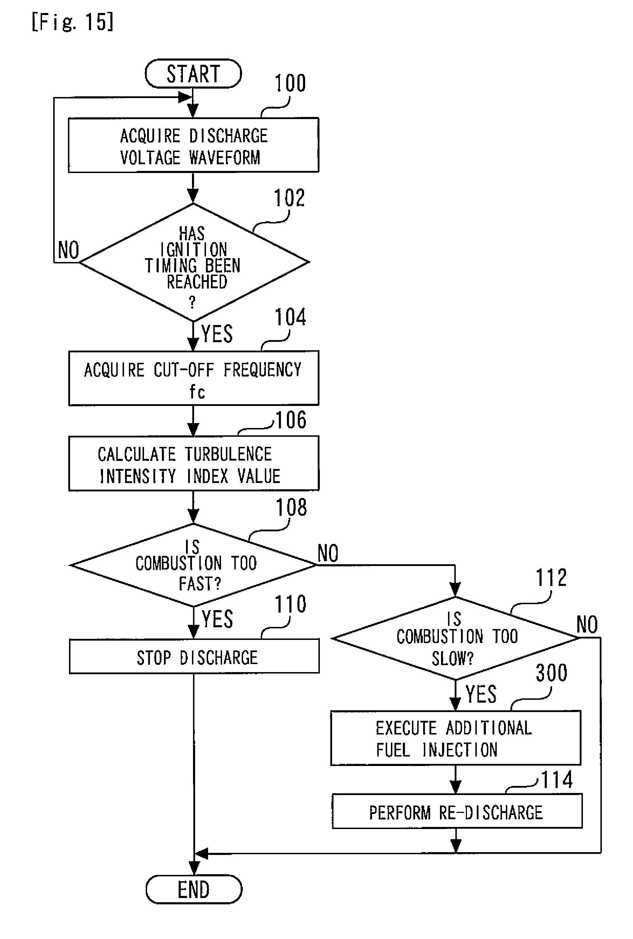

Next, a third embodiment of the present invention will be described referring mainly to Figure 15.

The system of the present embodiment can be realized by using the hardware configuration illustrated in Figure 1 and Figure 2, and causing the ECU 40 to execute the routine shown in Figure 15, described later, instead of the routine shown in Figure 10.

A feature of the system of the present embodiment is that as well as executing the ignition control of the first embodiment described above, the system additionally includes the following kind of fuel injection control. More specifically, in the present embodiment, at a time that ignition is detected, in a case where the calculated turbulence intensity index value is less than or equal to the above described second predetermined value and the detected ignition timing is later than the above described fourth predetermined value, prior to a re-discharge by the first spark plug 44, an additional fuel injection operation that is separate from the normal fuel injection operation is performed so that the air-fuel ratio of the air-fuel mixture in the vicinity of the first spark plug 44 becomes richer than in the area around the air-fuel mixture in question (that is, so that, in the vicinity of the first spark plug 44, an air-fuel mixture layer is formed that has an air-fuel ratio that is richer than in the area around the air-fuel mixture layer).

Figure 15 is a flowchart that illustrates a control routine that the ECU 40 executes to realize the characteristic ignition control and fuel injection control according to the third embodiment of the present invention. In Figure 15, steps that are the same as steps shown in Figure 10 according to the first embodiment are denoted by the same reference numerals, and a description of those steps is omitted or simplified.

In the routine illustrated in Figure 15, if the result determined in step 112 is affirmative, the ECU 40 executes the processing in step 300 prior to the processing in step 114. In step 300, the ECU 40 executes additional fuel injection so that, in the vicinity of the first spark plug 44, an air-fuel mixture layer is formed for which the air-fuel ratio is richer than in the area around the air-fuel mixture layer. It is assumed that the internal combustion engine 10 includes a structure (for example, a piston in which a cavity is formed in the top face thereof) for ensuring that a rich air-fuel mixture layer is formed in the vicinity of the first spark plug 44 when a small amount of fuel is injected from the fuel injection valve 28 at a timing immediately after ignition at which the additional fuel injection of the present step 300 is executed (that is, a timing at which the piston is positioned in the vicinity of the compression top dead center).

By performing the aforementioned additional fuel injection to form a rich air-fuel mixture layer in the vicinity of the first spark plug 44 prior to re-discharge by the first spark plug 44 in a case where the result determined in step 112 is affirmative (that is, a case where it can be predicted that both starting and progression of combustion will occur too slowly), the air-fuel mixture in the cylinder is surely combusted utilizing the re-discharge. As a result, the occurrence of a situation in which the flame kernel does not grow appropriately and misfiring occurs can be prevented. Thus, torque fluctuations can be suppressed.

Meanwhile, in the third embodiment that is described above, a configuration is adopted so that, for a cycle in which it is predicted that both starting and progression of combustion will occur too slowly based on a high-frequency component (turbulence-equivalent component) of the discharge voltage, additional fuel injection is performed so that a rich air-fuel mixture layer is formed in the vicinity of the first spark plug 44 prior to re-discharge by the first spark plug 44. Besides a case where re-discharge is scheduled in this manner, in a case where performance of a second discharge using the second spark plug 46 is scheduled as mentioned previously, a configuration may be adopted so that, for a cycle in which it is predicted that both starting and progression of combustion will occur too slowly, additional fuel injection is performed to form a rich air-fuel mixture layer in the vicinity of the second spark plug 46 prior to the second discharge. Further, when utilizing the turbulent burning velocity $S_T$ instead of the turbulence intensity index value as described above in the second embodiment also, additional fuel injection may be similarly performed prior to re-discharge or a second discharge.

Note that, in the above described third embodiment, the "fuel injection control means" according to the present invention is realized by the ECU 40 executing the processing in the above described step 300 prior to the processing in the above described step 114.

Fourth Embodiment

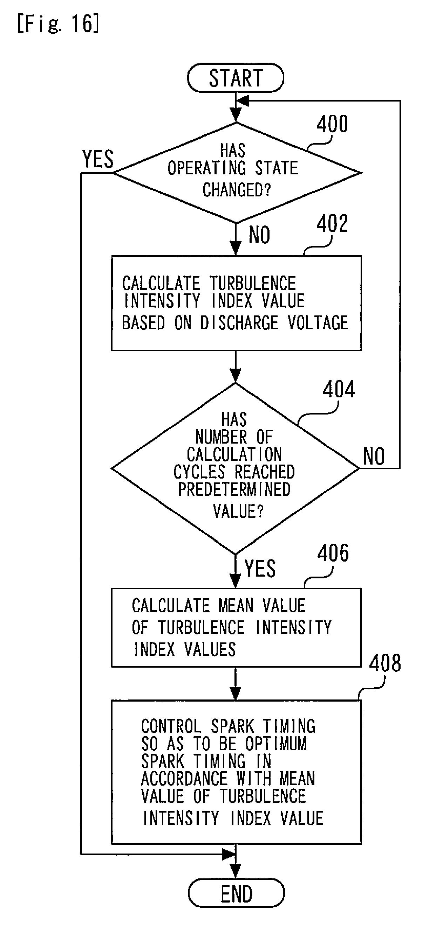

Next, a fourth embodiment of the present invention will be described referring mainly to Figure 16.

The system of the present embodiment can be realized by using the hardware configuration illustrated in Figure 1 and Figure 2, and causing the ECU 40 to execute the routine shown in Figure 16, described later, instead of the routine shown in Figure 10.

A feature of the system of the present embodiment is that control of the spark timing is performed in the following manner utilizing a turbulence intensity index value that is based on the discharge voltage that can be calculated according to the technique described above in the first embodiment. That is, the optimum spark timing in each operating state changes depending on the turbulence intensity of the air-fuel mixture in the cylinder. Therefore, in the present embodiment, analysis of the distribution (variations) of turbulence intensity index values that are calculated in a plurality of cycles under an identical operating state (under a substantially steady operating state) is performed. Further, the spark timing in the operating state in which the analysis is performed is controlled to an optimum spark timing (MBT) based on a result obtained by analyzing the distribution. Note that the aforementioned analysis and the spark timing control that is based on the analysis result are performed with respect to each operating state that changes during operation.

More specifically, in the present embodiment, as the aforementioned analysis, a mean value of turbulence intensity index values in a plurality of cycles under an identical operating state is calculated. Then, based on a map in which a relation between the turbulence intensity index values and the optimum spark timing is previously defined, a spark timing in an operating state in which the mean value was calculated is controlled so as to become the optimum spark timing that corresponds to the calculated mean value (in other words, that is based on the aforementioned distribution analysis result).

Figure 16 is a flowchart that illustrates a control routine that the ECU 40 executes to realize the characteristic spark timing control according to the fourth embodiment of the present invention. Note that, it is assumed that the present routine is executed for each cylinder when a substantially steady operating state (for example, a state defined based on the engine speed and the engine load (intake air amount or the like)) arrives.

In the routine illustrated in Figure 16, first the ECU 40 determines whether or not the operating state has changed relative to the operating state when the present routine started (step 400). If the determined result is that the operating state has not changed to an extent that exceeds a range which can be referred to as a substantially steady state, the ECU 40 calculates the turbulence intensity index value based on the discharge voltage of the first spark plug 44 in accordance with the technique described above in the first embodiment (step 402).

Next, the ECU 40 determines whether or not the number of cycles in which the turbulence intensity index value has been calculated in an identical operating state by means of the calculation in step 402 has reached a predetermined value (step 404). Calculation of the turbulence intensity index value in step 402 is repeatedly executed until the result of the determination in the present step 404 is affirmative, on the condition that an identical operating state is being maintained.

If the number of cycles in which the turbulence intensity index value was calculated in the identical operating state has reached the predetermined value, the ECU 40 calculates a mean value of the turbulence intensity index values over the plurality of cycles (that is, the above described calculation cycles) (step 406).

Next, the ECU 40 controls the spark timing so as to become the optimum spark timing in accordance with the calculated mean value of the turbulence intensity index values (step 408). A map that defines the relation between the turbulence intensity index values and the optimum spark timing (MBT) is stored in advance in the ECU 40, and in the present step 408 the ECU 40 refers to the map and acquires the optimum spark timing in accordance with the calculated mean value of the turbulence intensity index values as a target value.

According to the routine illustrated in Figure 16 that is described above, analysis of the distribution of turbulence intensity index values in a plurality of cycles under an identical operating state is performed by calculating the mean value of the turbulence intensity index values in the plurality of cycles. It is possible for changes over time to also arise in the turbulence of an air-fuel mixture in a cylinder due to changes over time in the internal combustion engine 10. It can be said that the above described analysis result (that is, the mean value of the turbulence intensity index values in a plurality of cycles) represents an average turbulence intensity index value in the current operating state under the current condition of the internal combustion engine 10 during the process of the condition of the internal combustion engine 10 changing with time. According to the above described routine, on the basis of the aforementioned average turbulence intensity index value, the spark timing in the current operating state can be controlled to the optimum spark timing in accordance with the aforementioned mean value. Consequently, even if changes over time also arise in the turbulence of an air-fuel mixture in a cylinder due to changes over time in the internal combustion engine 10, a deterioration in fuel efficiency due to changes over time in the turbulence of the air-fuel mixture can be suppressed.

Meanwhile, in the above fourth embodiment a description has been made regarding optimum spark timing control that utilizes a mean value of turbulence intensity index values that are based on a discharge voltage in accordance with the technique described above in the first embodiment. However, the optimum spark timing control of the present invention that is performed based on a result of analyzing the distribution of turbulence intensity index values over a plurality of cycles is not limited to the above described control. That is, the distribution analysis technique described above may also be a technique that, instead of calculating a mean value of turbulence intensity index values over a plurality of cycles, for example, calculates the median of turbulence intensity index values over a plurality of cycles.

In addition, the optimum spark timing control in the present invention is not limited to control that utilizes a turbulence intensity index value, and the optimum spark timing control may be performed in a similar manner by, for example, utilizing the turbulent burning velocity $S_T$ that is based on the discharge voltage that is calculated by the technique in the second embodiment described above instead of the turbulence intensity index value.

Note that, in the above described fourth embodiment, the "spark timing control means" according to the present invention is realized by the ECU 40 executing the processing in the above described steps 406 and 408.

Fifth Embodiment

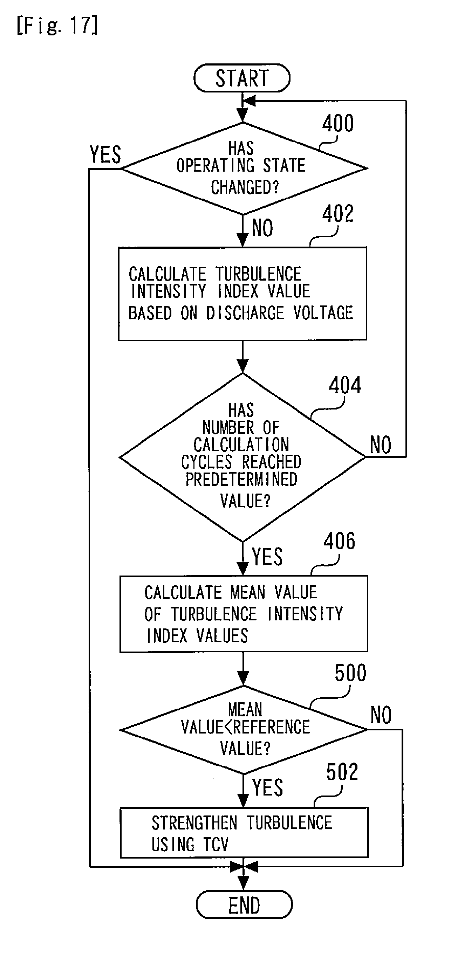

Next, a fifth embodiment of the present invention will be described referring mainly to Figure 17.

The system of the present embodiment can be realized by using the hardware configuration illustrated in Figure 1 and Figure 2, and causing the ECU 40 to execute the routine shown in Figure 17, described later, instead of the routine shown in Figure 10.

A feature of the system of the present embodiment is that control of the turbulence of in-cylinder gas (the air-fuel mixture) is performed in the following manner utilizing a turbulence intensity index value that is based on the discharge voltage that can be calculated according to the technique described above in the first embodiment. That is, in a case where combustion (particularly, lean-burn combustion) is performed in a state in which the turbulence of the air-fuel mixture has become less than the initial turbulence thereof due to reasons such as changes over time, because the burning velocity will be slower, there is a concern that combustion variations will increase. Therefore, in the present embodiment, analysis of the distribution (variations) of turbulence intensity index values that are calculated in a plurality of cycles under an identical operating state (under a substantially steady operating state) is performed. Further, the turbulence of the in-cylinder gas in the operating state in which the analysis is performed is increased based on the distribution analysis result. Note that the aforementioned analysis and the control of the turbulence of the in-cylinder gas that is based on the analysis result are performed with respect to each operating state that changes during operation.

More specifically, in the present embodiment, as the aforementioned analysis, similarly to the fourth embodiment, a mean value of turbulence intensity index values in a plurality of cycles under an identical operating state is calculated. Then, it is determined whether or not the calculated mean value is less than a reference value (turbulence intensity index value when the internal combustion engine 10 is in new condition) in the operating state in which the mean value was calculated. If it is determined by means of such analysis that the mean value is less than the reference value, the turbulence of the in-cylinder gas in the operating state in which the mean value was calculated is increased.

Figure 17 is a flowchart that illustrates a control routine that the ECU 40 executes to realize the characteristic control of the in-cylinder gas turbulence according to the fifth embodiment of the present invention. Note that it is assumed that the present routine is executed for each cylinder when a substantially steady operating state (for example, a state defined based on the engine speed and the engine load (intake air amount or the like)) is reached. Further, in Figure 17, steps that are the same as steps shown in Figure 16 according to the fourth embodiment are denoted by the same reference numerals, and a description of those steps is omitted or simplified.

In the routine illustrated in Figure 17, after calculating the mean value of turbulence intensity index values in a plurality of cycles in step 406, the ECU 40 determines whether or not the calculated mean value is less than the aforementioned reference value (step 500). The ECU 40 stores a map in which the relation between the above described reference value of the turbulence intensity index value and operating state is previously defined, and in the present step 500 the ECU 40 refers to the map and calculates a reference value of the turbulence intensity index value that corresponds to the current operating state.

If it is determined in step 500 that the mean value is less than the reference value, next, the ECU 40 strengthens the turbulence of the in-cylinder gas using the TCV 26 so that the difference between the mean value and the reference value is eliminated (step 502).

According to the routine illustrated in Figure 17 that is described above, analysis of the distribution of turbulence intensity index values in a plurality of cycles is performed by calculating a mean value of the turbulence intensity index values in the plurality of cycles under an identical operating state and comparing the calculated mean value with the above described reference value. Subsequently, if it is determined based on the analysis result that the mean value is less than the reference value, the turbulence of the in-cylinder gas is increased. Since it is thereby possible to increase (restore) the burning velocity, an increase in combustion variations can be suppressed.

Meanwhile, in the foregoing fifth embodiment, a description has been made with respect to control of the turbulence of in-cylinder gas that utilizes a mean value of turbulence intensity index values that are based on a discharge voltage in accordance with the technique described above in the first embodiment. However, the control of the turbulence of in-cylinder gas that is based on a result of analyzing the distribution of turbulence intensity index values over a plurality of cycles in the present invention is not limited to the above described control. That is, the distribution analysis technique described above may also be a technique that, instead of calculating a mean value of turbulence intensity index values over a plurality of cycles, for example, calculates a rate of variability of turbulence intensity index values in a plurality of cycles or calculates the median of turbulence intensity index values over a plurality of cycles.

More specifically, the term "rate of variability of turbulence intensity index values" used here refers to a parameter that indicates the acuteness of variations in the turbulence of the in-cylinder gas during a plurality of cycles under an identical operating state. This rate of variability of turbulence intensity index values can be calculated, for example, in the following manner. That is, with respect to the turbulence intensity index value of the individual cycles in the plurality of cycles, an absolute value of the rate of variability of the turbulence intensity index values with respect to a predetermined reference value (for example, a reference value described in the fifth embodiment) is calculated. Then, the average of the calculated absolute values of the rates of variability of the respective cycles is obtained. In a case where the rate of variability of turbulence intensity index values calculated in this manner is large, that is, in a case where there are acute variations in the turbulence of the in-cylinder gas during the plurality of cycles under an identical operating state, there is a concern that combustion variations will increase since there will be large variations in the burning velocity among cycles. Therefore, in such a case, by utilizing the rate of variability of turbulence intensity index values as a parameter and strengthening the turbulence of in-cylinder gas in the same way as in the above described fifth embodiment, the combustion in the respective cycles is stabilized, and consequently an increase in combustion variations can be suppressed.

Furthermore, control of the turbulence of in-cylinder gas in the present invention is not limited to control that utilizes the turbulence intensity index value, and the control can also be performed in a similar manner by utilizing, for example, the turbulent burning velocity $S_T$ that is based on the discharge voltage in accordance with the technique described in the foregoing second embodiment, instead of utilizing the turbulence intensity index value.

In addition, an actuator that is used for controlling the turbulence of in-cylinder gas in the present invention is not limited to the TCV 26. For example, the aforementioned actuator may be a swirl control valve (SCV) for generating a swirl flow (lateral vortex flow) in a cylinder, or may be a variable valve mechanism that is capable of providing a phase difference between the opening timings of a plurality of intake valves in the same cylinder.

Note that, in the above described fifth embodiment, the "gas flow strengthening means" according to the present invention is realized by the ECU 40 executing the series of processing in the above described steps 406, 500 and 502.

Sixth Embodiment

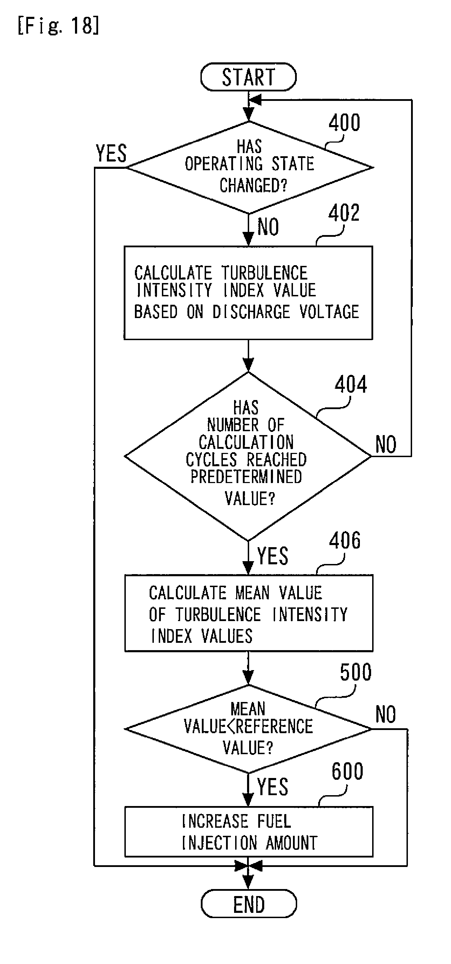

Next, a sixth embodiment of the present invention will be described referring mainly to Figure 18.

The system of the present embodiment can be realized by using the hardware configuration illustrated in Figure 1 and Figure 2, and causing the ECU 40 to execute the routine shown in Figure 18, described later, instead of the routine shown in Figure 10.

A feature of the system of the present embodiment is that fuel injection amount control is performed in the following manner at the time of lean-burn operation (more preferably, lean-burn operation with homogeneous combustion) utilizing a turbulence intensity index value that is based on a discharge voltage that can be calculated according to the technique described above in the first embodiment. That is, in a case where lean-burn operation is performed in a state in which the turbulence of the air-fuel mixture has become less than the initial turbulence thereof due to a reason such as changes over time, because the burning velocity will be slower due to the small amount of turbulence, there is a concern that combustion variations will increase. Therefore, in the present embodiment, analysis of the distribution (variations) of turbulence intensity index values that are calculated in a plurality of cycles under an identical operating state (under a substantially steady operating state) is performed. Further, at the time of lean-burn operation, the amount of fuel that is injected in the operating state in which the analysis is performed is increased based on the distribution analysis result. Note that such analysis and the fuel injection amount control at the time of lean-burn operation that is based on the analysis result are performed with respect to each operating state that changes during operation.

More specifically, in the present embodiment, as the aforementioned analysis, similarly to the fourth embodiment and the like, a mean value of turbulence intensity index values in a plurality of cycles under an identical operating state is calculated. It is then determined whether or not the calculated mean value is less than a reference value (turbulence intensity index value when the internal combustion engine 10 is in new condition) in the operating state in which the mean value was calculated. Further, at the time of lean-burn operation, if it is determined by means of such analysis that the mean value is less than the reference value, the fuel injection amount is increased in the operating state in which the mean value was calculated.

Figure 18 is a flowchart that illustrates a control routine that the ECU 40 executes to realize the characteristic fuel injection amount control according to the sixth embodiment of the present invention. Note that it is assumed that the present routine is executed for each cylinder when, at the time of lean-burn operation, a substantially steady operating state (for example, a state defined based on the engine speed and the engine load (intake air amount or the like)) is reached. Further, in Figure 18, steps that are the same as steps shown in Figure 17 according to the fifth embodiment are denoted by the same reference numerals, and a description of those steps is omitted or simplified.

In the routine shown in Figure 18, if the ECU 40 determines in step 500 that the mean value of turbulence intensity index values over a plurality of cycles is less than the aforementioned reference value, the ECU 40 then increases the fuel injection amount by a predetermined amount (step 600).

According to the routine illustrated in Figure 18 that is described above, at the time of lean-burn operation, analysis of the distribution of turbulence intensity index values over a plurality of cycles is performed by calculating a mean value of the turbulence intensity index values over the plurality of cycles under an identical operating state and comparing the calculated mean value with the above described reference value. Then, if it is determined based on the analysis result that the mean value is less than the reference value, the fuel injection amount is increased. Thus, since the burning velocity can be increased (restored) by enriching the in-cylinder air-fuel ratio, an increase in combustion variations can be suppressed.

Meanwhile, in the foregoing sixth embodiment, a description has been made with respect to fuel injection amount control that utilizes a mean value of turbulence intensity index values that are based on a discharge voltage in accordance with the technique described above in the first embodiment. However, the fuel injection amount control that is based on a result of analyzing the distribution of turbulence intensity index values over a plurality of cycles in the present invention is not limited to the above described control. That is, the distribution analysis technique described above may also be a technique that, instead of calculating a mean value of turbulence intensity index values over a plurality of cycles, for example, calculates a rate of variability of turbulence intensity index values in a plurality of cycles or calculates the median of turbulence intensity index values over a plurality of cycles. Note that the "rate of variability of turbulence intensity index values" mentioned here is the same as is described above in the fifth embodiment. That is, in a case where the rate of variability of turbulence intensity index values is greater than a predetermined reference value at the time of lean-burn operation, lean combustion in each cycle is stabilized by utilizing the rate of variability of the turbulence intensity index values as a parameter and increasing the fuel injection amount in the same way as in the above described sixth embodiment, and consequently an increase in combustion variations can be suppressed.

Further, fuel injection amount control in the present invention is not limited to control that utilizes the turbulence intensity index value, and the control can also be performed in a similar manner by utilizing, for example, the turbulent burning velocity $S_T$ that is based on the discharge voltage in accordance with the technique described in the foregoing second embodiment, instead of utilizing the turbulence intensity index value.

Note that, in the above described sixth embodiment, the "fuel amount increase execution means" according to the present invention is realized by the ECU 40 executing the series of processing in the above described steps 406, 500 and 600.

Seventh Embodiment

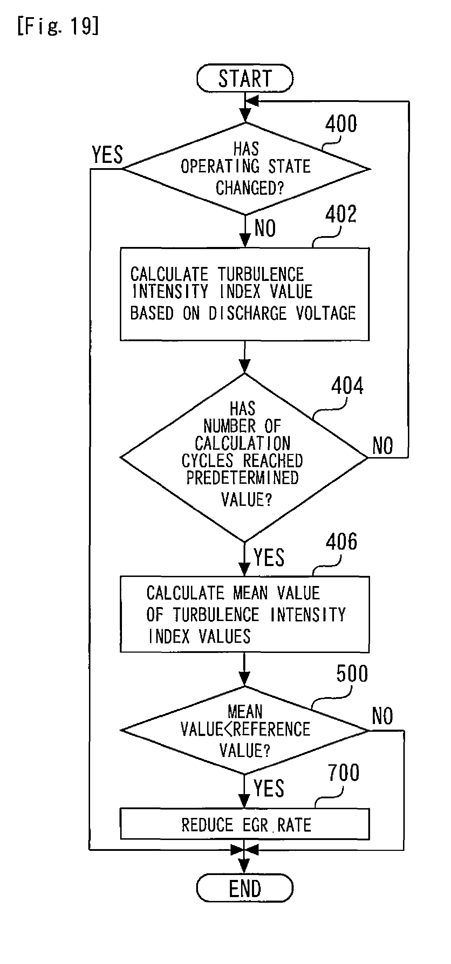

Next, a seventh embodiment of the present invention will be described referring mainly to Figure 19.

The system of the present embodiment can be realized by using the hardware configuration illustrated in Figure 1 and Figure 2, and causing the ECU 40 to execute the routine shown in Figure 19, described later, instead of the routine shown in Figure 10.

A feature of the system of the present embodiment is that EGR control is performed in the following manner utilizing a turbulence intensity index value that is based on the discharge voltage that can be calculated according to the technique described above in the first embodiment. That is, in a case where EGR gas is introduced into the cylinders and EGR combustion operation is performed in a state in which the turbulence of the air-fuel mixture has become less than the initial turbulence thereof due to reasons such as changes over time also, there is a concern that combustion variations will increase because the burning velocity will be slower due to the small scales of turbulence. Therefore, in the present embodiment, analysis of the distribution (variations) of turbulence intensity index values that are calculated in a plurality of cycles under an identical operating state (under a substantially steady operating state) is performed. Further, when performing EGR combustion operation, the EGR rate (exhaust gas recirculation rate) in the operating state in which the analysis is performed is lowered based on the distribution analysis result. Note that such analysis and the EGR control when performing EGR combustion operation that is based on the analysis result are performed with respect to each operating state that changes during operation.

More specifically, in the present embodiment, as the aforementioned analysis, similarly to the fourth embodiment and the like, a mean value of turbulence intensity index values over a plurality of cycles under an identical operating state is calculated. Then, it is determined whether or not the calculated mean value is less than a reference value (turbulence intensity index value when the internal combustion engine 10 is in new condition) in the operating state in which the mean value was calculated. Further, when performing EGR combustion operation, if it is determined by means of such analysis that the mean value is less than the reference value, the EGR rate is lowered in the operating state in which the mean value was calculated.

Figure 19 is a flowchart that illustrates a control routine that the ECU 40 executes to realize the characteristic EGR control according to the seventh embodiment of the present invention. Note that it is assumed that the present routine is executed for each cylinder when, during performing EGR combustion operation, a substantially steady operating state (for example, a state defined based on the engine speed and the engine load (intake air amount or the like)) is reached. Further, in Figure 19, steps that are the same as steps shown in Figure 17 according to the fifth embodiment are denoted by the same reference numerals, and a description of those steps is omitted or simplified.

In the routine shown in Figure 19, if the ECU 40 determines in step 500 that the mean value of turbulence intensity index values over a plurality of cycles is less than the aforementioned reference value, thereafter the ECU 40 reduces the degree of opening of the EGR valve 38 so that the EGR rate decreases to a predetermined value (including zero) (step 700).

According to the routine illustrated in Figure 19 that is described above, when performing EGR combustion operation, analysis of the distribution of turbulence intensity index values over a plurality of cycles is performed by calculating a mean value of the turbulence intensity index values over the plurality of cycles under an identical operating state and comparing the calculated mean value with the above described reference value. If it is determined based on the analysis result that the mean value is less than the reference value, the EGR rate is lowered. Thus, since the burning velocity can be increased (restored), an increase in combustion variations at a time of introducing EGR gas can be suppressed.

Meanwhile, in the foregoing seventh embodiment, a description has been made with respect to EGR control that utilizes a mean value of turbulence intensity index values that are based on a discharge voltage in accordance with the technique described above in the first embodiment. However, the EGR control that is based on a result of analyzing the distribution of turbulence intensity index values over a plurality of cycles in the present invention is not limited to the above described control. That is, the distribution analysis technique described above may also be a technique that, instead of calculating a mean value of turbulence intensity index values over a plurality of cycles, for example, calculates a rate of variability of turbulence intensity index values in a plurality of cycles or calculates the median of turbulence intensity index values over a plurality of cycles. Note that the "rate of variability of turbulence intensity index values" mentioned here is the same as is described above in the fifth embodiment. That is, in a case where the rate of variability of turbulence intensity index values is greater than a predetermined reference value when performing EGR combustion operation, by lowering the EGR rate in the same way as in the above described seventh embodiment that utilizes the rate of variability of the turbulence intensity index values as a parameter, EGR combustion in each cycle is stabilized, and consequently an increase in combustion variations can be suppressed.

Further, EGR control in the present invention is not limited to control that utilizes the turbulence intensity index value, and the control can also be performed in a similar manner by utilizing, for example, the turbulent burning velocity $S_T$ that is based on the discharge voltage in accordance with the technique described in the foregoing second embodiment, instead of utilizing the turbulence intensity index value.

In addition, the above seventh embodiment has been described using an example of control (so-called "external EGR control") that adjusts the amount of exhaust gas that is recirculated to the intake passage 12 through the EGR passage 36 by adjusting the degree of opening of the EGR valve 38. However, the EGR control according to the present invention is not limited to control that is based on the premise of performing external EGR control, and the EGR control according to the present invention may be based on the premise of performing control (so-called "internal EGR control") that adjusts the amount of exhaust gas that remains in cylinders by adjusting a valve overlap duration in which a valve opening duration of an intake valve and a valve opening duration of an exhaust valve overlap.

Note that, in the above described seventh embodiment, the "exhaust gas recirculation control means" according to the present invention is realized by the ECU 40 executing the series of processing in the above described steps 406, 500 and 700.

The above first to seventh embodiments have been described taking as an example the in-cylinder direct injection type internal combustion engine 10 that includes the fuel injection valve 28 that injects fuel directly into a cylinder. However, an internal combustion engine that is an object of the present invention is not limited to an in-cylinder direct injection type internal combustion engine, and may be a port-injection type internal combustion engine that includes a fuel injection valve that injects fuel into an intake port.

The respective controls described above in the first to seventh embodiments are not limited to controls that are implemented independently as described above, and may be appropriately combined and implemented within a possible range.

**Description of symbols**

| | |
|---|---|
| 10 | internal combustion engine |
| 12 | intake passage |
| 14 | exhaust passage |
| 16 | air cleaner |
| 18 | air flow meter |
| 20 | turbo-supercharger |
| 22 | intercooler |
| 24 | throttle valve |
| 26 | tumble control valve (TCV) |
| 28 | fuel injection valve |
| 30 | ignition device |
| 32 | catalyst |
| 34 | air-fuel ratio sensor |
| 36 | EGR passage |
| 38 | EGR valve |
| 40 | ECU (Electronic Control Unit) |
| 42 | crank angle sensor |
| 44 | first spark plug |
| 44a | center electrode of first spark plug |
| 44b | ground electrode of first spark plug |
| 46 | second spark plug |
| 46a | center electrode of second spark plug |
| 46b | ground electrode of second spark plug |
| 48 | first ignition coil |
| 48a | primary coil of first ignition coil |
| 48b | iron core of first ignition coil |
| 48c | secondary coil of first ignition coil |
| 50 | first capacitor |
| 52 | first energy generation device |
| 54 | first transistor |

56      second ignition coil
58      second capacitor
60      second energy generation device
62      second transistor

**Claims**

1.   A control apparatus for an internal combustion engine, comprising:

      a spark plug for igniting an air-fuel mixture in a cylinder;
      discharge voltage measurement means for measuring a discharge voltage of the spark plug; and
      ignition energy adjustment means for calculating a turbulence intensity index value that indicates a turbulence intensity of in-cylinder gas based on a predetermined frequency component that is extracted from a discharge voltage during at least a part of a discharge duration leading up to ignition, and adjusting, in accordance with the turbulence intensity index value, an ignition energy that is supplied to the spark plug during a combustion duration in a cycle in which the turbulence intensity index value is calculated.

2.   The control apparatus for an internal combustion engine according to claim 1,
      wherein the predetermined frequency component is a frequency component of a high frequency band that is equal to or greater than a predetermined frequency.

3.   The control apparatus for an internal combustion engine according to claim 1 or 2,
      wherein the ignition energy adjustment means stops a discharge by the spark plug in a case where the turbulence intensity index value is equal to or greater than a first predetermined value.

4.   The control apparatus for an internal combustion engine according to any one of claims 1 to 3,
      wherein the ignition energy adjustment means executes a re-discharge by the spark plug in a case where the turbulence intensity index value is equal to or less than a second predetermined value.

5.   The control apparatus for an internal combustion engine according to any one of claims 1 to 3, further comprising a second spark plug for igniting an air-fuel mixture in the cylinder,
      wherein the ignition energy adjustment means executes a discharge by the second spark plug in a case where the turbulence intensity index value is equal to or less than a second predetermined value.

6.   The control apparatus for an internal combustion engine according to claim 1 or 2, further comprising ignition timing detection means for detecting an ignition timing of an air-fuel mixture,
      wherein the ignition energy adjustment means stops a discharge by the spark plug in a case where the turbulence intensity index value is equal to or greater than a first predetermined value and the ignition timing is earlier than a third predetermined value.

7.   The control apparatus for an internal combustion engine according to any one of claims 1 to 3, further comprising ignition timing detection means for detecting an ignition timing of an air-fuel mixture,
      wherein the ignition energy adjustment means executes a re-discharge by the spark plug in a case where the turbulence intensity index value is equal to or less than a second predetermined value and the ignition timing is later than a fourth predetermined value.

8.   The control apparatus for an internal combustion engine according to any one of claims 1 to 3, further comprising:

      a second spark plug for igniting an air-fuel mixture in the cylinder; and
      ignition timing detection means for detecting an ignition timing of an air-fuel mixture,
      wherein the ignition energy adjustment means executes a discharge by the second spark plug in a case where the turbulence intensity index value is equal to or less than a second predetermined value and the ignition timing is later than a fourth predetermined value.

9.   The control apparatus for an internal combustion engine according to claim 4 or 7, further comprising fuel injection control means for executing a fuel injection prior to the re-discharge by the spark plug.

10. The control apparatus for an internal combustion engine according to claim 5 or 8, further comprising fuel injection control means for executing a fuel injection prior to a discharge by the second spark plug.

11. The control apparatus for an internal combustion engine according to any one of claims 1 to 10, further comprising spark timing control means for analyzing a distribution of the turbulence intensity index values that are calculated in a plurality of cycles under an identical operating state, and controlling a spark timing in an operating state in which the analysis is performed so as to be an optimum spark timing that is based on a result of the distribution analysis.

12. The control apparatus for an internal combustion engine according to any one of claims 1 to 11, further comprising gas flow strengthening means for analyzing a distribution of the turbulence intensity index values that are calculated in a plurality of cycles under an identical operating state, and strengthening a turbulence of in-cylinder gas in an operating state in which the analysis is performed based on a result of the distribution analysis.

13. The control apparatus for an internal combustion engine according to any one of claims 1 to 12, further comprising fuel amount increase execution means for analyzing a distribution of the turbulence intensity index values that are calculated in a plurality of cycles under an identical operating state at a time of lean-burn operation under an air-fuel ratio that is leaner than a stoichiometric air-fuel ratio and, based on a result of the distribution analysis, increasing a fuel injection amount in an operating state in which the analysis is performed at a time of the lean-burn operation.

14. The control apparatus for an internal combustion engine according to any one of claims 1 to 13, further comprising exhaust gas recirculation control means for analyzing a distribution of the turbulence intensity index values that are calculated in a plurality of cycles under an identical operating state, and lowering an exhaust gas recirculation rate in an operating state in which the analysis is performed based on a result of the distribution analysis.

15. A control apparatus for an internal combustion engine, comprising:

a spark plug for igniting an air-fuel mixture in a cylinder;
discharge voltage measurement means for measuring a discharge voltage of the spark plug; and
estimation means for estimating a turbulent burning velocity that is a burning velocity in a turbulent flow state of an air-fuel mixture in the cylinder based on a predetermined frequency component that is extracted from a discharge voltage during at least a part of a discharge duration leading up to ignition.

16. The control apparatus for an internal combustion engine according to claim 15,
wherein the predetermined frequency component is a frequency component of a high frequency band that is equal to or greater than a predetermined frequency.

17. The control apparatus for an internal combustion engine according to claim 15 or 16,
wherein the estimation means calculates a turbulence intensity index value that indicates a turbulence intensity of in-cylinder gas based on the predetermined frequency component, and estimates the turbulent burning velocity based on the turbulence intensity index value that is calculated.

18. The control apparatus for an internal combustion engine according to any one of claims 15 to 17, further comprising ignition energy adjustment means for adjusting, in accordance with the turbulent burning velocity, an ignition energy that is supplied to the spark plug during a combustion duration in a cycle in which the turbulent burning velocity is estimated.

19. The control apparatus for an internal combustion engine according to claim 18,
wherein the ignition energy adjustment means stops a discharge by the spark plug in a case where the turbulent burning velocity is equal to or greater than a fifth predetermined value.

20. The control apparatus for an internal combustion engine according to claim 18,
wherein the ignition energy adjustment means executes a re-discharge by the spark plug in a case where the turbulent burning velocity is equal to or less than a sixth predetermined value.

21. The control apparatus for an internal combustion engine according to claim 18, further comprising:

a second spark plug for igniting an air-fuel mixture in the cylinder,
wherein the ignition energy adjustment means executes a discharge by the second spark plug in a case where the turbulent burning velocity is equal to or less than a sixth predetermined value.

22. The control apparatus for an internal combustion engine according to claim 18, further comprising ignition timing detection means for detecting an ignition timing of an air-fuel mixture,
wherein the ignition energy adjustment means stops a discharge by the spark plug in a case where the turbulent burning velocity is equal to or greater than a fifth predetermined value and the ignition timing is earlier than a seventh predetermined value.

23. The control apparatus for an internal combustion engine according to claim 18, further comprising ignition timing detection means for detecting an ignition timing of an air-fuel mixture,
wherein the ignition energy adjustment means executes a re-discharge by the spark plug in a case where the turbulent burning velocity is equal to or less than a sixth predetermined value and the ignition timing is later than an eighth predetermined value.

24. The control apparatus for an internal combustion engine according to claim 18, further comprising:

a second spark plug for igniting an air-fuel mixture in the cylinder; and
ignition timing detection means for detecting an ignition timing of an air-fuel mixture;
wherein the ignition energy adjustment means executes a discharge by the second spark plug in a case where the turbulent burning velocity is equal to or less than a sixth predetermined value and the ignition timing is later than an eighth predetermined value.

25. The control apparatus for an internal combustion engine according to claim 20 or 23, further comprising fuel injection control means for executing a fuel injection prior to the re-discharge by the spark plug.

26. The control apparatus for an internal combustion engine according to claim 21 or 24, further comprising fuel injection control means for executing a fuel injection prior to a discharge by the second spark plug.

27. The control apparatus for an internal combustion engine according to any one of claims 15 to 26, further comprising spark timing control means for analyzing a distribution of the turbulent burning velocities that are calculated in a plurality of cycles under an identical operating state, and controlling a spark timing in an operating state in which the analysis is performed so as to be an optimum spark timing that is based on a result of the distribution analysis.

28. The control apparatus for an internal combustion engine according to any one of claims 15 to 27, further comprising gas flow strengthening means for analyzing a distribution of the turbulent burning velocities that are calculated in a plurality of cycles under an identical operating state, and strengthening a turbulence of in-cylinder gas in an operating state in which the analysis is performed based on a result of the distribution analysis.

29. The control apparatus for an internal combustion engine according to any one of claims 15 to 28, further comprising fuel amount increase execution means for analyzing a distribution of the turbulent burning velocities that are calculated in a plurality of cycles under an identical operating state at a time of lean-burn operation under an air-fuel ratio that is leaner than a stoichiometric air-fuel ratio and, based on a result of the distribution analysis, increasing a fuel injection amount in an operating state in which the analysis is performed at a time of the lean-burn operation.

30. The control apparatus for an internal combustion engine according to any one of claims 15 to 29, further comprising exhaust gas recirculation control means for analyzing a distribution of the turbulent burning velocities that are calculated in a plurality of cycles under an identical operating state, and lowering an exhaust gas recirculation rate in an operating state in which the analysis is performed based on a result of the distribution analysis.

[Fig. 1]

[Fig. 2]

[Fig. 3]

[Fig. 4]

MEASUREMENT POINT

MAIN FLOW

[Fig. 5]

AA:LOW-FREQUENCY COMPONENT    BB:HIGH-FREQUENCY COMPONENT
→MAIN FLOW                    →TURBULENCE

AA

BB

45          15

POSITIVE

FLOW VELOCITY

0

NEGATIVE

CC          DD

360    270    180    90    0

CC:INTAKE STROKE    CRANK ANGLE (BTDC)    DD:COMPRESSION STROKE

[Fig. 6]

TIME 1    ⟶    TIME 2

44        44

44a
DISCHARGE
PATH

44a
DISCHARGE PATH

44b

44b

FLOW VELOCITY

OSCILLATION OF FLOW VELOCITY
DUE TO TURBULENCE

[Fig. 7]

[Fig. 8]

[Fig. 9]

[Fig. 10]

```
              ┌─────────┐
              │  START  │
              └────┬────┘
                   │              ╭── 100
                   ▼
        ┌──────────────────────┐
        │  ACQUIRE DISCHARGE   │
        │   VOLTAGE WAVEFORM   │
        └──────────┬───────────┘
                   │           ╭── 102
                   ▼
              ╱ HAS       ╲
   NO    ╱ IGNITION TIMING ╲
◄───────┤   BEEN REACHED    │
         ╲        ?        ╱
              ╲         ╱
                   │ YES       ╭── 104
                   ▼
        ┌──────────────────────┐
        │ ACQUIRE CUT-OFF FREQUENCY fc │
        └──────────┬───────────┘
                   │           ╭── 106
                   ▼
        ┌──────────────────────┐
        │ CALCULATE TURBULENCE │
        │  INTENSITY INDEX VALUE │
        └──────────┬───────────┘
                   │        ╭── 108
                   ▼
              ╱  IS   ╲          NO                         ╭── 112
           ╱ COMBUSTION TOO ╲───────────────┐         ╱  IS   ╲      NO
           ╲    FAST?    ╱                   ▼      ╱ COMBUSTION TOO ╲────┐
              ╲       ╱ │ YES    ╭── 110         ╲    SLOW?    ╱         │
                      ▼                             ╲       ╱            │
        ┌──────────────────────┐                         │ YES  ╭── 114  │
        │    STOP DISCHARGE    │                         ▼               │
        └──────────┬───────────┘             ┌──────────────────────┐    │
                   │                         │  PERFORM RE-DISCHARGE │    │
                   │                         └──────────┬───────────┘    │
                   ▼                                    ▼                 │
              ┌─────────┐◄──────────────────────────────────────────────┘
              │   END   │
              └─────────┘
```

[Fig. 11]

[Fig.12]

[Fig.13]

[Fig. 14]

```
                    START          100

                      │
                      ▼
          ┌─────────────────────────┐
          │  ACQUIRE DISCHARGE       │
          │  VOLTAGE WAVEFORM        │
          └─────────────────────────┘
                      │
                      ▼              102
                    ╱─────────╲
                   ╱    HAS    ╲
          NO      ╱  IGNITION   ╲
         ◄───────  TIMING BEEN   
                  ╲   REACHED   ╱
                   ╲     ?     ╱
                    ╲─────────╱
                      │ YES         104
                      ▼
          ┌─────────────────────────┐
          │ ACQUIRE CUT-OFF FREQUENCY│
          │           fc            │
          └─────────────────────────┘
                      │              106
                      ▼
          ┌─────────────────────────┐
          │  CALCULATE TURBULENCE    │
          │  INTENSITY INDEX VALUE   │
          └─────────────────────────┘
                      │              200
                      ▼
          ┌─────────────────────────┐
          │  CALCULATE TURBULENT     │
          │  BURNING VELOCITY ST     │
          └─────────────────────────┘
                      │              202
                      ▼
                    ╱─────────╲         NO
                   ╱    IS      ╲──────────────┐
                  ╱ COMBUSTION TOO            204
                  ╲    FAST?    ╱              ▼
                   ╲─────────╱            ╱─────────╲
                      │ YES    110       ╱    IS      ╲    NO
                      ▼              ╱ COMBUSTION TOO  ╲──────┐
          ┌──────────────────┐      ╲    SLOW?    ╱          │
          │  STOP DISCHARGE   │       ╲─────────╱            │
          └──────────────────┘          │ YES    114         │
                      │                  ▼                    │
                      │       ┌────────────────────┐          │
                      │       │ PERFORM RE-DISCHARGE│          │
                      │       └────────────────────┘          │
                      │                  │                    │
                      ▼                  ▼                    │
                      └─────────────────◄─────────────────────┘
                      │
                      ▼
                    END
```

[Fig. 15]

```
                    ┌─────────┐
                    │  START  │
                    └────┬────┘
                         │         ┌── 100
          ┌──────────────▼──────────────┐
          │      ACQUIRE DISCHARGE       │
          │     VOLTAGE WAVEFORM         │
          └──────────────┬──────────────┘
                         │
                         │         ┌── 102
                    ╱────▼────╲
          NO       ╱    HAS    ╲
    ◄─────────────╱  IGNITION   ╲
                  ╲ TIMING BEEN  ╱
                   ╲  REACHED   ╱
                    ╲    ?    ╱
                     ╲──┬──╱
                        │ YES      ┌── 104
          ┌─────────────▼──────────────┐
          │  ACQUIRE CUT-OFF FREQUENCY  │
          │            fc               │
          └─────────────┬──────────────┘
                        │           ┌── 106
          ┌─────────────▼──────────────┐
          │    CALCULATE TURBULENCE     │
          │   INTENSITY INDEX VALUE     │
          └─────────────┬──────────────┘
                        │           ┌── 108
                   ╱────▼────╲        NO
                  ╱    IS     ╲──────────────┐
                 ╱ COMBUSTION  ╲             │
                 ╲   TOO FAST? ╱             │
                  ╲──┬──╱                    │
                     │ YES    ┌── 110        │     ┌── 112
          ┌──────────▼──────────┐       ╱────▼────╲      NO
          │   STOP DISCHARGE     │      ╱    IS     ╲──────────┐
          └──────────┬──────────┘      ╱ COMBUSTION  ╲         │
                     │                 ╲  TOO SLOW?  ╱         │
                     │                  ╲──┬──╱                │
                     │                     │ YES   ┌── 300     │
                     │           ┌─────────▼──────────┐        │
                     │           │ EXECUTE ADDITIONAL  │        │
                     │           │  FUEL INJECTION     │        │
                     │           └─────────┬──────────┘        │
                     │                     │      ┌── 114      │
                     │           ┌─────────▼──────────┐        │
                     │           │ PERFORM RE-DISCHARGE │        │
                     │           └─────────┬──────────┘        │
                     │                     │                   │
                     └─────────────────────┼───────────────────┘
                              ┌─────────┐
                              │   END   │
                              └─────────┘
```

[Fig. 16]

```
                    ┌─────────┐
                    │  START  │◄──────────────┐
                    └────┬────┘               │
                         │                    │
                         ▼                    │
                       ╱   ╲      400          │
              YES    ╱  HAS   ╲                │
            ◄───────╱ OPERATING ╲              │
                    ╲  STATE    ╱              │
                     ╲ CHANGED? ╱              │
                       ╲   ╱                   │
                         │ NO      402          │
                         ▼                      │
              ┌──────────────────────┐          │
              │ CALCULATE TURBULENCE │          │
              │ INTENSITY INDEX VALUE│          │
              │ BASED ON DISCHARGE   │          │
              │ VOLTAGE              │          │
              └──────────┬───────────┘          │
                         │                      │
                         ▼                      │
                       ╱   ╲      404            │
                     ╱  HAS   ╲                  │
                    ╱ NUMBER OF ╲    NO          │
                   ╱ CALCULATION ╲──────────────┘
                   ╲ CYCLES REACHED╱
                    ╲PREDETERMINED╱
                     ╲  VALUE?   ╱
                       ╲   ╱
                         │ YES     406
                         ▼
              ┌──────────────────────┐
              │ CALCULATE MEAN VALUE │
              │ OF TURBULENCE        │
              │ INTENSITY INDEX      │
              │ VALUES               │
              └──────────┬───────────┘
                         │             408
                         ▼
              ┌──────────────────────┐
              │ CONTROL SPARK TIMING │
              │ SO AS TO BE OPTIMUM  │
              │ SPARK TIMING IN      │
              │ ACCORDANCE WITH MEAN │
              │ VALUE OF TURBULENCE  │
              │ INTENSITY INDEX VALUE│
              └──────────┬───────────┘
                         │
              ◄──────────┤
                         ▼
                    ┌─────────┐
                    │   END   │
                    └─────────┘
```

[Fig. 17]

```
                        ┌─────────┐
                        │  START  │
                        └─────────┘
                             │
                             ▼                    400
                      ╱─────────────╲
             YES     ╱      HAS       ╲
         ◄─────────── OPERATING STATE ──
                      ╲   CHANGED?    ╱
                       ╲─────────────╱
                             │ NO              402
                             ▼
                  ┌──────────────────────┐
                  │ CALCULATE TURBULENCE │
                  │ INTENSITY INDEX VALUE│
                  │ BASED ON DISCHARGE VOLTAGE │
                  └──────────────────────┘
                             │
                             ▼                    404
                      ╱─────────────╲
                     ╱      HAS       ╲
                    ╱    NUMBER OF      ╲   NO
                   │   CALCULATION       ├─────►
                    ╲ CYCLES REACHED    ╱
                     ╲ PREDETERMINED   ╱
                      ╲   VALUE?      ╱
                       ╲────────────╱
                             │ YES             406
                             ▼
                  ┌──────────────────────┐
                  │  CALCULATE MEAN VALUE │
                  │ OF TURBULENCE INTENSITY│
                  │     INDEX VALUES       │
                  └──────────────────────┘
                             │
                             ▼                    500
                      ╱─────────────╲
                     ╱     MEAN       ╲   NO
                    │ VALUE<REFERENCE  ├─────►
                     ╲    VALUE?      ╱
                      ╲────────────╱
                             │ YES             502
                             ▼
                  ┌──────────────────────┐
                  │ STRENGTHEN TURBULENCE │
                  │     USING TCV         │
                  └──────────────────────┘
                             │
                             ▼
                        ┌─────────┐
                        │   END   │
                        └─────────┘
```

[Fig. 18]

```
                    ( START )
                        │
                        ▼
        YES      ╱  HAS        ╲  400
      ◄─────────◄ OPERATING STATE ►
                 ╲  CHANGED?   ╱
                        │
                       NO  402
                        ▼
              ┌─────────────────────┐
              │ CALCULATE TURBULENCE│
              │ INTENSITY INDEX VALUE│
              │ BASED ON DISCHARGE VOLTAGE│
              └─────────────────────┘
                        │
                        ▼
                 ╱  HAS        ╲  404
                ╱  NUMBER OF   ╲
               ╱  CALCULATION  ╲    NO
              ◄ CYCLES REACHED  ►───────►
               ╲ PREDETERMINED ╱
                ╲   VALUE?    ╱
                        │
                      YES  406
                        ▼
              ┌─────────────────────┐
              │ CALCULATE MEAN VALUE│
              │ OF TURBULENCE INTENSITY│
              │ INDEX VALUES        │
              └─────────────────────┘
                        │
                        ▼
                 ╱   MEAN      ╲  500    NO
                ◄ VALUE<REFERENCE ►──────►
                 ╲   VALUE?    ╱
                        │
                      YES  600
                        ▼
              ┌─────────────────────┐
              │ INCREASE FUEL       │
              │ INJECTION AMOUNT    │
              └─────────────────────┘
                        │
                        ▼
                    ( END )
```

[Fig. 19]

START

400 HAS OPERATING STATE CHANGED?

YES

NO

402 CALCULATE TURBULENCE INTENSITY INDEX VALUE BASED ON DISCHARGE VOLTAGE

404 HAS NUMBER OF CALCULATION CYCLES REACHED PREDETERMINED VALUE?

NO

YES

406 CALCULATE MEAN VALUE OF TURBULENCE INTENSITY INDEX VALUES

500 MEAN VALUE<REFERENCE VALUE?

NO

YES

700 REDUCE EGR RATE

END

## INTERNATIONAL SEARCH REPORT

International application No.

PCT/JP2012/081551

A. CLASSIFICATION OF SUBJECT MATTER
*F02P9/00*(2006.01)i, *F02P15/00*(2006.01)i

According to International Patent Classification (IPC) or to both national classification and IPC

B. FIELDS SEARCHED

Minimum documentation searched (classification system followed by classification symbols)
F02P9/00, F02P15/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2012-219627 A (Toyota Motor Corp.),<br>12 November 2012 (12.11.2012),<br>paragraphs [0037] to [0043]; fig. 1 to 9<br>(Family: none) | 1-30 |
| A | JP 2010-138880 A (Diamond Electric Mfg. Corp.),<br>24 June 2010 (24.06.2010),<br>paragraphs [0013] to [0044]; fig. 1 to 6<br>(Family: none) | 1-30 |
| A | JP 2007-92617 A (Nissan Motor Co., Ltd.),<br>12 April 2007 (12.04.2007),<br>paragraphs [0008] to [0010]<br>(Family: none) | 1-30 |

☒ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>04 March, 2013 (04.03.13) | Date of mailing of the international search report<br>12 March, 2013 (12.03.13) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2012/081551

C (Continuation). DOCUMENTS CONSIDERED TO BE RELEVANT

| Category* | Citation of document, with indication, where appropriate, of the relevant passages | Relevant to claim No. |
|---|---|---|
| A | JP 6-207577 A (NGK Spark Plug Co., Ltd.),<br>26 July 1994 (26.07.1994),<br>paragraphs [0014] to [0015]<br>& US 5491417 A  & EP 0715074 A1<br>& EP 0544548 A1  & DE 69227573 T2 | 1-30 |
| A | JP 7-119533 A (Unisia Jecs Corp.),<br>09 May 1995 (09.05.1995),<br>paragraph [0025]<br>(Family: none) | 1-30 |
| A | JP 2010-190091 A (Toyota Motor Corp.),<br>02 September 2010 (02.09.2010),<br>paragraphs [0017] to [0034]<br>(Family: none) | 1-30 |
| A | JP 2011-169179 A (Mitsubishi Electric Corp.),<br>01 September 2011 (01.09.2011),<br>paragraphs [0035] to [0038]<br>(Family: none) | 1-30 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 63168282 A
- JP 7238858 A
- JP 2009013850 A